(19) Europäisches Patentamt / European Patent Office / Office européen des brevets

(11) **EP 1 952 574 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
***H04L 9/08*** *(2006.01)*     ***H04L 29/06*** *(2006.01)*
***H04L 12/28*** *(2006.01)*

(21) Anmeldenummer: **07788107.6**

(22) Anmeldetag: **01.08.2007**

(86) Internationale Anmeldenummer:
**PCT/EP2007/057936**

(87) Internationale Veröffentlichungsnummer:
**WO 2008/019943 (21.02.2008 Gazette 2008/08)**

(54) **VERFAHREN UND ANORDNUNG ZUM BEREITSTELLEN EINES DRAHTLOSEN MESH-NETZWERKS**

METHOD AND APPARATUS FOR THE CREATION OF A WIRELESS MESH NETWORK

PROCÉDÉ ET DISPOSITIF DE MISE À DISPOSITION D'UN RÉSEAU MAILLÉ SANS FIL

(84) Benannte Vertragsstaaten:
**DE FR GB IT SE**

(30) Priorität: **17.08.2006 DE 102006038591**

(43) Veröffentlichungstag der Anmeldung:
**06.08.2008 Patentblatt 2008/32**

(73) Patentinhaber: **Siemens Enterprise Communications GmbH & Co. KG
81379 München (DE)**

(72) Erfinder:
• **FALK, Rainer
85435 Erding (DE)**
• **KOHLMAYER, Florian
82319 Starnberg (DE)**

(74) Vertreter: **Fritzsche, Thomas et al
Fritzsche Patent
Naupliastrasse 110
81545 München (DE)**

(56) Entgegenhaltungen:
**WO-A-03/094438**

• **AGRE J ET AL: "Secure NOmadic Wireless Mesh (SnowMesh) 802.11 TGs ESS Mesh Networking Proposal" INTERNET CITATION, [Online] Mai 2005 (2005-05), XP007902206 Gefunden im Internet: URL:http://www.flacp.fujitsulabs.com/ snowm esh.pdf> [gefunden am 2007-04-27]**

EP 1 952 574 B1

## Beschreibung

Die Erfindung betrifft ein Verfahren zum Bereitstellen eines drahtlosen Mesh-Netzwerks gemäß dem Oberbegriff des Anspruchs 1 sowie eine Anordnung zum Bereitstellen eines drahtlosen Mesh-Netzwerks gemäß dem Oberbegriff des Anspruchs 30.

Die Erfindung betrifft ein Verfahren und ein System zum Bereitstellen eines Schlüssels zur Verschlüsselung von Nachrichten zwischen Knoten eines Mesh-Netzwerkes.

Ein drahtloses Maschen- bzw. Mesh-Netzwerk ist ein vermaschtes Netz, das beispielsweise in einem Wireless Local Area Network (WLAN) implementiert ist. Bei einem Mesh-Netzwerk kann ein mobiler Knoten Daten, die von einem anderen mobilen Knoten stammen, an einen weiteren mobilen Knoten weiterleiten oder an eine Basisstation übertragen. In einem Maschennetzwerk bzw. Mesh-Netzwerk (Mesh-Network) können weite Distanzen überspannt werden, insbesondere in unebenen oder schwierigen Terrain. Maschennetze arbeiten zudem sehr zuverlässig, da jeder mobile Knoten mit einigen anderen Knoten verbunden ist. Wenn ein Knoten ausfällt, beispielsweise auf Grund eines Hardware-Defekts, suchen dessen Nachbarknoten eine alternative Datenübertragungsroute. Maschennetze bzw. Mesh-Networks können feste oder mobile Geräte mit einbeziehen.

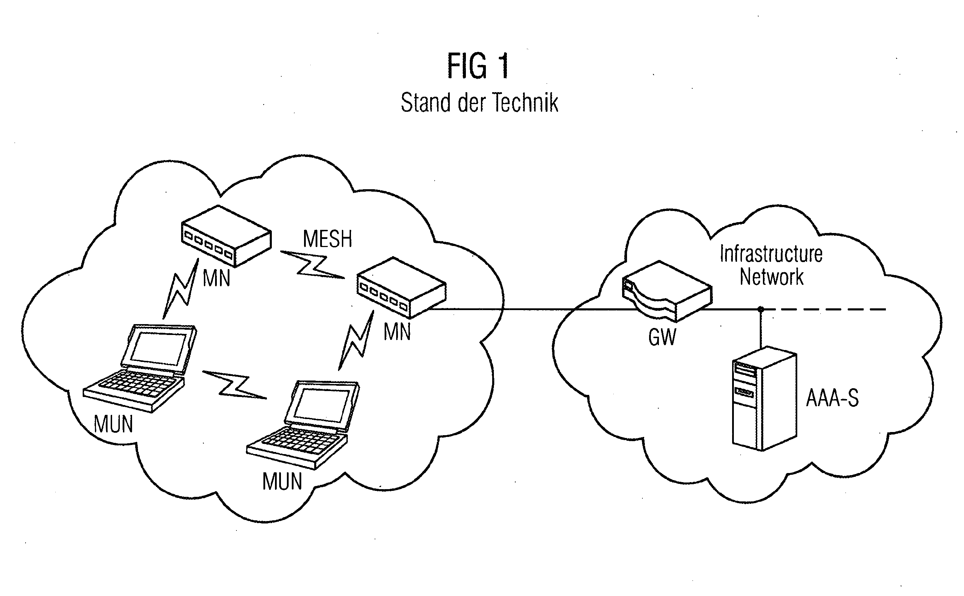

Fig. 1 zeigt schematisch ein Maschennetzwerk nach dem Stand der Technik. Die Knoten umfassen dedizierte Maschenknoten (MN), die zur Infrastruktur des Netzwerkes gehören. Bei diesen dedizierten Maschenknoten kann es sich um eine feste Basisstation BS aber auch um eine mobile Station MS handeln. Neben den dedizierten Maschenknoten umfasst das Maschennetzwerk auch mobile Endgeräte bzw. mobile Knoten von Nutzern. Die mobilen Knoten können direkt mit anderen mobilen Knoten kommunizieren und direkt oder indirekt über weitere Knoten Daten mit einer Basisstation BS austauschen, die an einem Gateway GW eines Datennetzwerkes angeschlossen ist. Dabei werden Datenpakete DP von einem Gerät bzw. Knoten zum nächsten Gerät weitergeleitet bis das Zielgerät bzw. das Gateway GW erreicht ist. Die Weiterleitung der Datenpakte DP erfolgt dabei durch dynamisches Routing. Die Routen, auf denen die Datenpakte DP übertragen werden, werden dabei dynamisch auf Bäsis der Verfügbarkeit der Knoten und auf Basis der Netzauslastung berechnet. Allgemein zeichnen sich Maschennetzwerke durch eine hohe Netzabdeckung, eine hohe Zuverlässigkeit und durch einen sparsamen Umgang mit verfügbaren Ressourcen aus. Bei drahtlosen Maschennetzwerken wird die drahtlose Übertragungstrecke herkömmlicherweise durch eine WLAN (Wireless Local Area Network) Übertragungstrecke realisiert. Im Gegensatz zu einem Wireless Personal Area Network (WPAN) haben WLAN Netze größere Sendeleistungen und Reichweiten und bieten höhere Datenübertragungsraten.

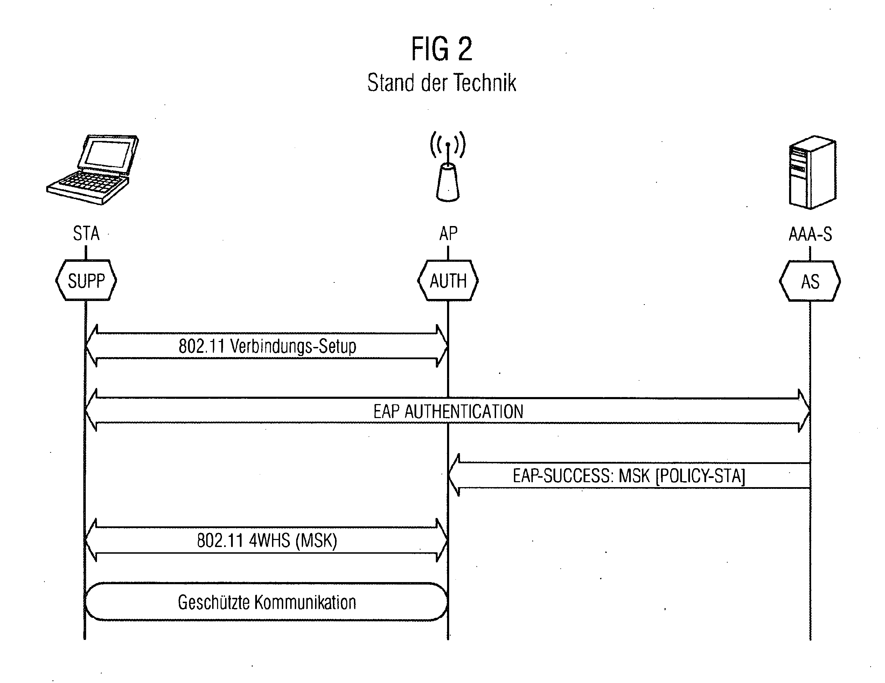

Zur Authentisierung von Knoten bzw. Rechnern wird das sogenannte EAP (Extensible Authentication Protocol) eingesetzt, welches beispielsweise aus der IEEE 802.X-2004: "IEEE standard for local and metropolitan area networks - Port-based network access control", ISBN.0-7381-4528-8, 13. Dezember 2004, S.37-40, bekannt ist. Fig. 2 zeigt ein Signaldiagramm zur Darstellung eines Authentisierungsvorgangs bei einem herkömmlichen WLAN-Netz. Das EAP-Protokoll wird bei WLAN zur Absicherung des Netzwerkzugangs verwendet. Vielfältige konkrete Authentisierungsverfahren, sogenannte EAP-Methoden, können über das EAP-Protokoll transportiert werden, z.B. EAP-TLS, EAP-AKA, PEAP-MSChapv2. Bei der Authentisierung wird ein kryptographischer Schlüssel bzw. Sitzungsschlüssel MSK, EMSK (MSK: Master-Session Key; EMSK: Extended Master Session Key) ermittelt, der nachfolgend zum Schutz der Datenkommunikation, beispielsweise bei der Link-Layer-Verschlüsselung verwendet wird. Die Authentisierung eines Teilnehmers erfolgt zwischen dem Teilnehmer (Supplicant) und einem Authentisierungsserver (AAA-Server). Bei erfolgreicher Authentisierung sendet der Authentisierungsserver das Ergebnis der Authentisierung und den aus der Authentisierung stammenden Sitzungsschlüssel MSK an den Authentikator, beispielsweise einem WLAN-Access-Point AP. Die Kommunikation zwischen dem Zugangsknoten bzw. Access-Point AP und dem Authentisierungsserver erfolgt üblicherweise über das Radius- oder Diameter-Daten-Übertragungs-Protokoll. Dabei wird der Sitzungsschlüssel MSK als Datenattribut an den Zugangsknoten AP als Teil einer EAP-Success-Nachricht gesendet. Der übertragene Sitzungsschlüssel MSK wird anschließend in einem 802.11 4-Wege-Handshake 802.11 4WHS zwischen dem Teilnehmer und den Zugangsknoten gemäß dem 802.11 IEEE Standard eingesetzt.

Bei einem herkömmlichen Netzwerk handelt es sich bei dem Zugangsknoten AP um einen vertrauenswürdigen Knoten, d.h. um einen Knoten der Netzinfrastruktur. Bei dem Zugangsknoten handelt es sich bei einem herkömmlichen Netzwerk somit nicht um einen Endnutzerknoten.

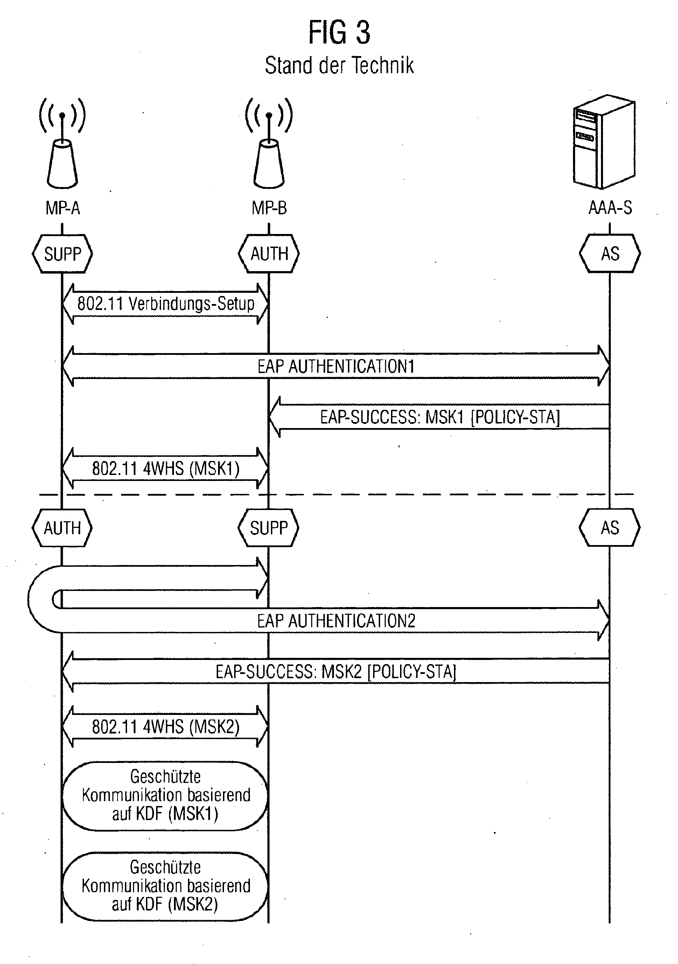

Fig. 3 zeigt die Authentisierung zweier Knoten MP-A, MP-B bei einem herkömmlichen WLAN-Netz. Bei den beiden Knoten MP-A, MP-B kann es sich beispielsweise um zwei Maschenknoten eines Maschennetzwerkes bzw. Mesh-Networks handeln. Zum Aufbau einer Datenverbindung zwischen den beiden Knoten MP-A, MP-B authentisiert sich zunächst der Endknoten MP-A (als Supplicant) bei dem zugehörigen Authentisierungsserver AS mittels des EAP-Datenübertragungsprotokolls. In einer EAP-Success-Nachricht erhält der Knoten MP-B (Authentikator) einen Sitzungsschlüssel MSK1. Anschließend führt der Knoten MP-B mit dem Knoten MP-A einen 4-Wege-Handshake durch und verwendet dabei den erhaltenen Sitzungsschlüssel MSK1. Anschließend führt der Knoten MP-B (nun als Supplicant) eine Authentisierung an dem zughörigen Authentisierungsserver AS durch, und MP-A (nun Authentikator) erhält in einer EAP-Success-Nachricht einen zweiten Sitzungsschlüssel MSK2. Der Knoten MP-A führt anschließend einen 4-Wege-Handshake mit dem Knoten MP-B unter Verwendung des zweiten Sitzungsschlüssel MSK2 durch. Die beiden Authentisierungen können anstatt nacheinander auch ineinander verschachtelt erfolgen.

Bei der weiteren Kommunikation zwischen den beiden Knoten MP-A, MP-B kann diese durch einen der beiden Sitzungsschlüssel MSK1, MSK2 abgesichert werden.

Ein Nachteil der in Figur 3 dargestellten Vorgehensweise nach dem Stand der Technik besteht darin, dass es sich bei den Knoten MP-A, MP-B um Mesh-Knoten handeln kann, die nicht Teil der Netzzugangsinfrastruktur und somit manipulierbar sind. Da ein Mesh-Knoten mit benachbarten Mesh-Knoten kommuniziert, sind mehrfache Authentisierungen eines Mesh-Knotens erforderlich. Dies führt zu einer hohen Belastung des Authentisierungsservers und einem hohem Signalisierungsaufwand für die Übertragung von Authentisierungsnachrichten zum Authentisierungsserver im Infrastrukturnetz.

Aus der IEEE 802.11i-2004: "IEEE standard for local and metropolitan area networks - Wireless LAN Medium Access Conrol - Security Enhancements", ISBN 0-7381-4073-2, 23. Juli 2004, S. 13-15, 19-20, ist eine Verbesserung des EAP-Authentifizierungsverfahrens für den Standard IEEE 802.11 bekannt.

Ein WLAN Mesh-Netzwerk ist beispielsweise aus "Faccin, S.M., u.a.: Mesh WLAN networks: concept and system design". Wireless Communications, IEEE. Volume 13, Issue 2, April 2006, S. 10-17, bekannt, wobei sich die Netzelemente gegenseitig authentifizieren.

Aus Jyh-Cheng, C, u.a.: "Wireless LAN security and IEEE 802.11i." Wireless Communications, IEEE, Volume 12, Issue 1, Feb. 2005, S. 27-36, ist eine Erweiterung des aus dem IEEE 802.11 bekannten Authentifizierungsverfahrens zu entnehmen, während in Fan, Y., u.a.: "An improved security scheme in WMAN based on IEEE standard 802.16." Proceedings, International Conference on Wireless Communications, Networking and Mobile computing, Volume 2, 23.-26.Sept. 2005, S. 1191-1194, eine Erweiterung des aus dem IEEE 802.16 bekannten Authentifizierungsverfahrens beschrieben ist.

Die US 2005/01 52 305 A1 offenbart ein Authentifizierungsverfahren in einem WLAN Netzwerk unter Verwendung eines EAP-Proxys.

Der vorliegenden Erfindung liegt daher die Aufgabe zugrunde, ein verbessertes Verfahren sowie Anordnung zur Bereitstellung eines drahtlosen Mesh-Netzwerks anzugeben.

Diese Aufgabe wird ausgehend von dem Oberbegriff des Anspruchs 1 durch dessen kennzeichnende Merkmale sowie ausgehend vom Gattungsbegriff des Anspruchs 30 durch dessen kennzeichnende Merkmale gelöst.

Bei dem erfindungsgemäßen Verfahren zum Bereitstellen eines drahtlosen lokalen Netzwerks, bei dem nach dem IEEE 802.11 Standard und seinen Derivaten insbesondere IEEE 802.15 oder IEEE 802.16 ausgestaltete stationäre Kommunikationseinrichtungensowie mobile Kommunikationseinrichtungen nach Art des Mesh als Subnetzwerk verbunden sind und welches an ein Infrastrukturnetzwerk derart angeschlossen wird, dass es mit einem im Infrastrukturnetzwerk angeordneten "Authentication Authorization Accounting" AAA-Server unter Nutzung des Extensible Authentication Protokolls EAP Authentisierungsnachrichten über eine dem Subnetz zugeordnete Station austauschen kann, generiert nach erfolgreicher erstmaliger Authentisierung einer ersten Kommunikationseinrichtung des Subnetzes unter Angabe einer ersten Identitätsinformation gegenüber einer für die Authentisierung der ersten Kommunikationseinrichtung eine gemäß des EAP Protokolls definierte Rolle eines Authentikators (Authenticator) erfüllenden Kommunikationseinrichtung des Subnetzes der AAA-Server innerhalb eines ersten Gültigkeitszeitraums genau einmal eine für das Subnetz gültige Verschlüsselungsbasisinformation, wobei die Verschlüsselungsbasisinformation einer dem Subnetz eindeutig zuordenbaren Station übermittelt wird, und wobei die Station zumindest die Verschlüsselungsbasisinformation speichert und sie der ersten Kommunikationseinrichtung angegebenen Identitätsinformation zuordnet und wobei die Station der erstmaligen Authentisierung folgende Authentisierungsversuche seitens der ersten Kommunikationseinrichtung gegenüber einer zweiten Kommunikationseinrichtung des Subnetzes unter Angabe einer zweiten Identitätsinformation nach Art eines Proxy-Servers unter Auslassung des AAA-Servers auf Grundlage der durch die angegebene zweite Identitätsinformation bestimmte Verschlüsselungsbasisinformation unter Nutzung des Extensible Authentication Protokolls EAP abwickelt sowie der zweiten Kommunikationseinrichtung einen für die zweite Kommunikationseinrichtung unter Verwendung der gespeicherten Verschlüsselungsbasisinformation ermittelten Schlüssel zur kryptographisch gesicherten Kommunikation mit der ersten Kommunikationseinrichtung bereitstellt.

Die sich aus dem erfindungsgemäßen Verfahren ergebenden Vorteile bestehen zum einen darin, dass ein Infrastrukturserver AAA-Server weniger belastet werden muss als es gemäß dem Stand der Technik erfolgen würde. Dies ergibt sich daraus, dass er im Grunde nur die erste Anmeldung der ersten Kommunikationseinrichtung abwickeln muss und folgende Anmeldungen der ersten Kommunikationseinrichtung mit Hilfe der Station erfolgen. Ferner ist der Signalisierungsaufwand innerhalb des Infrastrukturnetzes zum Übertragen der erforderlichen EAP Anmeldenachrichten verringert. Außerdem können der initialen Anmeldung folgende Anmeldungen wesentlich schneller durchgeführt werden, da die Nachrichtenübertragung zur Station schneller erfolgt als zu einem, häufig weit entfernten, Infrastruktur AAA-Server. Der Aufwand ist zudem auf die jeweils erste Kommunikationseinrichtung beschränkt, da für die die Authenticator-Rolle gewährleistende Kommunikationseinrichtung es unerheblich ist, ob es sich um eine erste oder eine folgende Authentisierung handelt.

Bei einer vorteilhaften Weiterbildung enthält die Verschlüsselungsbasisinformation als Information zumindest einen Verschlüsselungsschlüssel, mit dem eine gesicherte Authentisierung durchgeführt werden kann und somit ein kryptographischer Schlüssel bereitgestellt wird, welcher für die geschützte Kommunikation zwischen zwei Mesh Kommunikationseinrichtungen verwendet werden kann. Dieser bereitgestellte Schlüssel wird vorzugsweise dynamisch als Sitzungsschlüssel im Rahmen der gesicherten Authentisierung als Sitzungsschlüssel erzeugt. Somit wird für den Schutz eines Links zu jeder Nachbarkommunikationseinrichtung unterschiedliches Schlüsselmaterial bereitgestellt.

Wird der Verschlüsselungsschlüssel durch die Station als ein dem ersten Kommunikationsgerät zugeordneter Schlüssel gespeichert, ist sichergestellt, dass jedes erste Kommunikationsgerät einen erfindungsgemäßen Schlüssel aufweist.

Vorzugsweise wird zur Abwicklung der Authentisierungsversuche dieser gespeicherte Schlüssel verwendet. Insbesondere kann eine der EAP Methoden EAP PSK, EAP TLS mit TLS-PSK (TLS unter Verwendung eines Pre-Shared-Keys) oder EAP AKA genutzt werden.

Speichert die Station einen Schlüssel, welcher aus dem Verschlüsselungsschlüssel abgeleitet und dem ersten Kommunikationsgerät zugeordnet wird, wird der Verschlüsselungsschlüssel nicht für unterschiedliche Zwecke verwendet, sondern es kann beispielsweise der abgeleitete Schlüssel für weitere Authentisierungen der ersten Kommunikationseinrichtung genutzt werden, so dass zusätzliche Sicherheit geboten ist.

Vorteilhaft ist ferner, wenn der AAA-Server aus dem Verschlüsselungsschlüssel einen Schlüssel ableitet und als einen dem ersten Kommunikationsgerät zugeordneten Schlüssel im Rahmen der erstmaligen Authentisierung als Teil der Verschlüsselungsinformation übermittelt.

Vorteilhaft ist auch, dass die Übermittlung des zugeordneten Schlüssels mit einer gemäß EAP Protokoll als EAP Success Nachricht ausgestalteten Nachricht erfolgt. Dies hat den Vorteil, dass das erfindungsgemäße Verfahren ohne größere Anpassung in vorhandene Systeme eingeführt werden kann, da die jeweils zweite Kommunikationseinrichtung den Schlüssel, wie es im Stand der Technik bereits bekannt ist, erhält.

Erfolgt die Ableitung derart, dass der zugeordnete Schlüssel mittels einer Schlüsselableitungsfunktion auf Grundlage eines gemäß dem EAP Protokoll gebildeten Master Session Key MSK Schlüssels erzeugt wird, ist ebenso eine leichtere Implementierung des erfindungsgemäßen Verfahrens möglich, wie es auch der Fall ist, wenn die Ableitung derart erfolgt, dass der zugeordnete Schlüssel mittels einer Schlüsselableitungsfunktion auf Grundlage eines gemäß EAP Protokoll gebildeten Extended Master Session Keys EMSK erzeugt wird, da beide in IEEE 802.11 und seinen Derivaten genutzte Verschlüsselungsschlüssel sind.

Erfolgt die Ableitung durch den AAA-Server, hat dies den Vorteil, dass sowohl MSK als EMSK Schlüssel verwendet werden können.

Bei der Ableitung aus einem EMSK Schlüssel ist vorteilhaft, wenn seitens des AAA-Servers an die Station zusätzlich zum MSK auch der aus dem EMSK abgeleitete Schlüssel übertragen wird.

Erfolgt die Ableitung durch die Station, so muss der AAA-Server nicht erweitert werden, um diese Schlüsselableitung durchzuführen.

Wird als Schlüsselableitungsfunktion des zugeordneten Verschlüsselungsschlüssels eine Funktion gemäß einer kryptographischen Hash-Funktion, insbesondere SHA-1, SHA-256 oder MD5, verwendet, wird eine kryptographische Separierung gewährleistet, so dass vermieden wird, dass ein einziger Schlüssel für unterschiedliche Zwecke verwendet wird. Basiert dagegen die Schlüsselableitungsfunktion des zugeordneten Verschlüsselungsschlüssels auf so genannten Keyed Hash Funktionen, insbesondere HMAC nach RFC2104, so hat dies den Vorteil, dass man noch in die Schlüsselableitung eine Zeichenkette einbauen kann, die beispielsweise den Verwendungszweck des abgeleiteten Schlüssels angibt.

Eine sehr praktikable Weiterbildung ist dabei dadurch gegeben, dass der zugeordnete Verschlüsselungsschlüssel gemäß einer Schlüsselableitungsfunktion gebildet wird, die sich aus der Formel

$$\text{M-AAA-Key} = \text{HMAC-SHA-1 (MSK, „Mesh-AAA-Key“)}$$

ergibt, wobei mit "M-AAA-KEY" der so abgeleitete Schlüssel, mit "HMAC-SHA-1" die Keyed Hash Funktion HMAC unter Verwendung der Hash-Funktion "SHA-1" bezeichnet sind und wobei mit "MSK" der gemäß EAP Protokoll ermittelte Master Session Key und mit "Mesh-AAA-Key" eine beliebige Zeichenkette, die insbesondere den Verwendungszweck des Schlüssels wiedergibt, bezeichnet ist.

Vorteilhaft ist es ferner, dass der zugeordnete Schlüssel mit dem nach dem EAP Protokoll gebildeten Master Session Key MSK Schlüssel oder dem Extended Master Session Key EMSK Schlüssel Identität aufweist, da dies eine Variante mit geringfügigem Rechenaufwand darstellt.

Entspricht der erste Gültigkeitszeitraum der Gültigkeitsdauer eines gemäß EAP Protokolls gebildeten Master Session Key und/oder Extended Master Session Key, so ist die Gültigkeit der nachfolgenden Authentisierung nicht länger als die der ersten Authentisierungen, sondern die Gültigkeitsdauer des Schlüssels der ersten Authentisierung gilt auch für die nachfolgenden Authentisierungen, so dass der absolute Endzeitpunkt der gleiche ist, während ein die Gültigkeitsdauer des zugeordneten Schlüssels bestimmender zweiter Gültigkeitszeitraum, der der Gültigkeitsdauer eines gemäß EAP Protokoll gebildeten Maser Session Keys entspricht, dazu führt, dass die relative Gültigkeitsdauer gemessen ab Authentisierung gleich ist.

Alternativ wird eine Gültigkeitsdauer des zugeordneten Schlüssels bestimmender zweiter Gültigkeitszeitraum durch eine festgelegte Anzahl zulässiger Authentifizierungen bestimmt, so dass ermöglicht wird, eine Anzahl von Authentifizierungen zu begrenzen.

Eine besonders geeignete Weiterbildung stellt es dar, wenn als Station ein das Subnetz mit dem Infrastrukturnetz verbindender Umsetzer (Gateway) genutzt wird.

Werden der Verschlüsselungsinformation Netzwerkattribute bestimmende Parameter, insbesondere eine sogenannte Policy wie beispielsweise die maximale Bandbreite, QoS-Reservierungen, die Gültigkeitsdauer, nutzerbezogene Kontoinformation und/oder Verkehrsfilterregeln beigefügt, werden auch für die nachfolgenden Authentisierungen der jeweiligen Authenticator-Kommunikationseinrichtung diese Informationen bereitgestellt.

Besonders geeignet erscheint es, wenn die den ersten Authentisierungen folgenden Authentisierungen nach der gemäß EAP-Protokoll spezifizierten EAP-PSK Methode erfolgen. Dies hat den Vorteil, dass anhand der verwendeten Methode die Station ermittelt, dass es für einen aktuellen Authentisierungsversuch im Sinne eines Proxy-Servers unter Auslassung von Kommunikation mit dem AAA-Server diese Authentisierung durchführt.

Dies ist insbesondere dann von Vorteil, wenn die Abwicklung nach Art eines Proxy-Servers derart erfolgt, dass nach der erstmaligen erfolgten Authentisierung die Auslassung des AAA-Servers durch Terminieren von gemäß EAP-Protokoll gebildeten Nachrichten in der Station erfolgt, wobei das Terminieren in Abhängigkeit von mit den Nachrichten korrelierenden Informationen durchgeführt wird. Hierdurch wird eine einfache Methode zur Verfügung gestellt, mit der das erfindungsgemäße Verfahren implementiert wird, so dass gemäß dem erfindungsgemäßen Verfahren erfolgende Authentisierungsversuche bei der Station terminiert werden können, während erste Authentisierungsversuche und andere Nachrichten an den AAA-Server, wie aus dem Stand der Technik bekannt, weitergesendet werden können.

Eine sehr simple Implementierung ohne größeren Änderungsaufwand bestehender Systeme ist gegeben, wenn als korrelierende Information die Art der verwendeten EAP-Protokollmethode detektiert wird. Alternativ hierzu ist es von Vorteil, als korrelierende Information die "Network Access Identifier" NAI, welche insbesondere einen Aufbau der Form user@realm aufweist, wobei "user" die Nachricht absendende Station bezeichnet und "realm" die insbesondere durch den AAA-Server bereitgestellte Domäne kennzeichnet, derart manipuliert wird, dass sich aus der mit den Nachrichten korrelierenden Informationen die Station als Adressat ergibt. Hierdurch wird ein in EAP-Systemen üblicher Aufbau zur Adressierung folgerichtig auch für die Erfindung genutzt. Dabei wird vorzugsweise eine die Station bezeichnende Zeichenkette hinzugefügt und dass die NAI insbesondere die Form "{mesh-aaa}user@realm", "user{mesh-aaa}@realm" oder "user@{mesh-aaa}.realm" aufweist, dies führt vorteilhaft dazu, dass die Station eindeutig gekennzeichnet und adressiert ist. Eine weitere vorteilhafte Alternative ist gegeben, wenn als Manipulation der Domänenbezeichnung die Bezeichnung der Station gesetzt wird und insbesondere die Form "user@mesh-aaa" aufweist.

Sind nach Ablauf des Gültigkeitszeitraums weitere Authentisierungen nur nach erneuter, insbesondere vor Ablauf des Gültigkeitszeitraums durchgeführter erstmaliger Authentisierung beim AAA-Server erfolgreich, ist die Gültigkeit der ersten und der darauf basierenden nachfolgenden Authentifikationen begrenzt, so dass die Sicherheit erhöht wird, weil ein neuer die Sicherheit gewährender Authentisierungsvorgang gestartet werden muss.

Alternativ oder ergänzend ist es von Vorteil, dass die Verschlüsselungsbasisinformation als Information zumindest einen nach Art des gemäß RFC4187 Sektion 1 gebildeten AKA Authentisierungsvektor enthält, wobei vorzugsweise für die Bildung des AKA Verschlüsselungsvektors ein gemäß EAP Protokoll gebildeter Master Session Key als nach Art des AKA erforderlicher geheimer Schlüssel gesetzt wird.

Weitere Einzelheiten und Vorteile der Erfindung sollen ausgehend vom in den Figuren 1 bis 3 dargestellten Stand der Technik anhand von in den Figuren 4 bis 7 dargestellten Ausführungsbeispielen näher erläutert werden. Dabei zeigt

Figur 1     ein Mesh-Netzwerk Szenario,
Figur 2     ein Ablaufdiagram einer Mesh-Authentisierung gemäß Draft D0.01 IEEE802.11s,
Figur 3     ein Ablaufdiagram einer WLAN Authentisierung nach dem Stand der Technik,
Figur 4     ein Ablaufdiagram einer initialen Mesh-Anmeldung gemäß einem Ausführungsbeispiel der Erfindung,
Figur 5     ein Ablaufdiagram einer der initialen Mesh- Anmeldung folgenden Authentisierung,
Figur 6     ein Ablaufdiagram eines zweiten Ausführungsbei- spiels der Erfindung,
Figur 7     ein Ablaufdiagram eines dritten Ausführungsbei- spiels der Erfindung.

Ausgehend von dem in den Figuren 1 bis 3 dargestellten Szenario soll in den folgenden Figuren das erfindungsgemäße Verfahren anhand von Ausführungsbeispielen näher erläutert werden, wobei gleiche Einheiten und Verfahrensschritte in den jeweiligen Figuren die gleiche Bezeichnung erhalten.

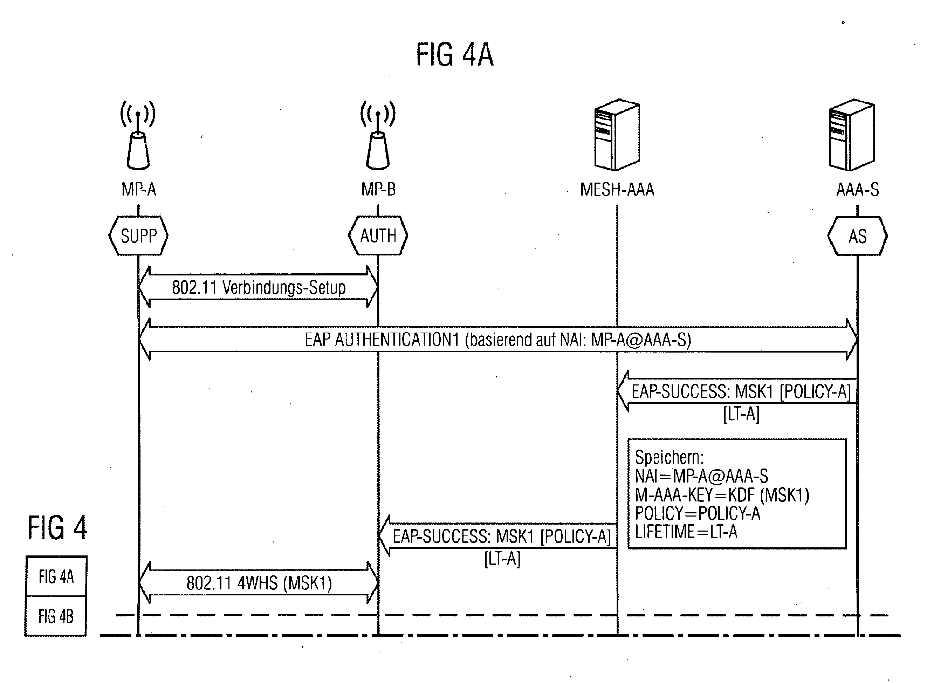

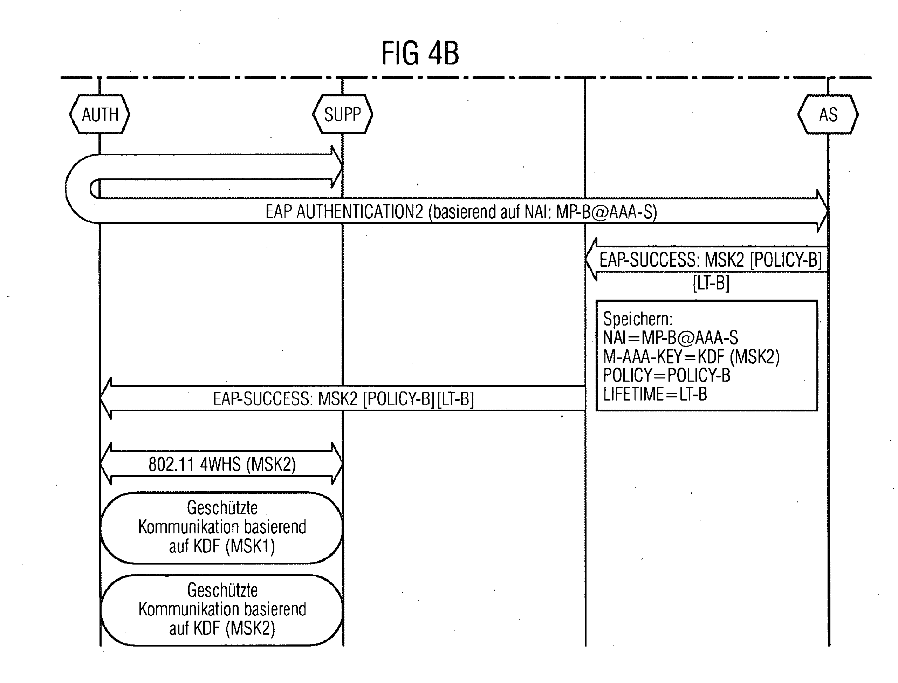

Kern der Erfindung ist es, dass ein neuer Knoten bzw. eine auf dem Knoten realisierte Funktionalität in Figur 4 bis 6 mit MESH-AAA bezeichnet als ein AAA-Proxy betrieben wird, welcher zwischen dem Maschenknoten und dem AAA-Server geschaltet ist.

Dieser neue Knoten MESH-AAA kann z.B. auf einem Mesh Gateway Knoten GW realisiert sein, der das Maschennetzwerk mit einem Infrastrukturnetzwerk verbindet.

Das erfindungsgemäße Verfahren sieht nun vor, dass bei einer erfolgreichen Authentisierung eines ersten Mesh Knotens, d.h. einer ersten Kommunikationseinrichtung MP-A der neue Knoten, d.h. die Station MESH-AAA einen vom AAA-Server AAA-S erhaltenen Schlüssel bzw. einen daraus abgeleiteten Schlüssel abspeichert und zwar derart, dass dieser der ersten Kommunikationseinrichtung MP-A zugeordnet ist.

In der Figur 4 ist dieser Schlüssel als M-AAA Key bezeichnet. Alternativ oder ergänzend ist es erfindungsgemäß auch vorgesehen, dass falls der AAA-Server AAA-S Parameter zum Betreiben einer Verbindung, d.h. eine so genannte Policy POLICY für die erste Kommunikationseinrichtung MP-A aufweist, diese ebenfalls an die Station MESH-AAA gesendet und auch zugeordnet zu der ersten Kommunikationseinrichtung MP-A gespeichert wird.

Weitere Attribute bzw. Parameter POLICY, die sich auf die erste Kommunikationseinrichtung MP-A bzw. den Schlüssel M-AAA-KEY beziehen, wie beispielsweise die Gültigkeitsdauer des Schlüssels LT oder die Nutzerkennung werden ebenfalls zugeordnet zur ersten Kommunikationseinrichtung MP-A in der Station MESH-AAA abgespeichert. Dabei ist vorzugsweise die Gültigkeitsdauer des Schlüssels M-AAA-KEY identisch zu der Gültigkeitsdauer des Sitzungsschlüssels MSK.

Auch die erste Kommunikationseinrichtung MP-A speichert den eingerichteten und an die Station MESH-AAA übertragenen Schlüssel M-AAA-KEY , wobei dieser nicht an die erste Kommunikationseinrichtung MP-A übertragen worden ist, sondern dieser von der ersten Kommunikationseinrichtung MP-A selbst als Resultat der bekannten EAP-Authentisierung bestimmt wurde. Erfindungsgemäß ist nun des Weiteren vorgesehen, dass für EAP Anmeldungen der ersten Kommunikationseinrichtung MP-A gegenüber weiteren Mesh Knoten des Maschennetzwerks der Schlüssel M-AAA-KEY verwendet wird, wobei bevorzugt eine für diesen geheimen Schlüssel bzw. sogenannten Secret Key geeignete EAP-Methode, z.B. die Methode EAP-PSK verwendet wird.

Ferner funktioniert bei diesen weiteren Anmeldungen die Station MESH-AAA als AAA Server, d.h. Authentisierungsversuche führen dazu, dass die Station MESH-AAA das EAP Protokoll terminiert, wobei dazu die gespeicherten Daten wie der Schlüssel M-AAA-KEY sowie die Parameter POLICY verwendet werden und der AAA-Server AAA-S des Infrastrukturnetzwerks INFRASTRUCTURE NETWORK bei diesen Anmeldungen nicht mehr involviert ist.

,Der Effekt dieses erfindungsgemäßen Vorgehens ist zum einen, dass für eine beschränkte Zeitdauer, die sich beispielsweise nach der Gültigkeitsdauer des Sitzungsschlüssels MSK bestimmt, die Aufgaben des AAA-Servers AAA-S an die Station MESH-AAA delegiert für alle AAA-Klienten des MESH Maschennetzes.

Die Bestimmung des erfindungsgemäßen Mesh Keys M-AAA-KEY kann wie folgt realisiert werden. Zum einen besteht die Möglichkeit, den Schlüssel M-AAA-KEY mit dem Sitzungsschlüssel MSK gleichzusetzen, welcher aus der EAP Authentisierung resultiert oder der Mesh Key M-AAA-KEY wird auf Basis einer Schlüsselableitungsfunktion KDF aus dem Sitzungsschlüssel MSK ermittelt, wobei dies durch den AAA-Server AAA-S oder durch die Station MESH-AAA erfolgen kann. Schließlich besteht auch die Möglichkeit, den Schlüssel M-AAA-KEY auf Basis einer Schlüsselableitungsfunktion KDF mit dem erweiterten Sitzungsschlüssel EMSK auf dem AAA-Server AAA-S berechnen zu lassen. Dabei eignen sich für die Schlüsselableitungsfunktions KDF vor allem kryptographische Hash Funktionen, wie z.B. SHA-1, MD5, SHA256 oder darauf basierende Keyed Hash Funktionen, wie beispielsweise HMAC nach RFC2104.

Als eine konkrete Realisierung für die Schlüsselableitungsfunktion eignet sich beispielsweise

$$M\text{-}AAA\text{-}KEY = HMAC\text{-}SHA\text{-}1 \ (MSK, \ „Mesh\text{-}AAA\text{-}Key")$$,

wobei die Zeichenkette "Mesh-AAA-Key" explizit den Verwendungszweck des abgeleiteten Schlüssels M-AAA-KEY angibt.

Erfolgt die Schlüsselableitung des Mesh Keys M-AAA-KEY auf dem AAA-Server AAA-S, so sendet der AAA-Server AAA-S diesen abgeleiteten Schlüssel M-AAA-KEY als Teil der EAP Success Nachricht EAP-SUCCESS, während in dem Fall, in dem die Ableitung auf der Station MESH-AAA erfolgt, oder der Mesh Key M-AAA-KEY den Wert des Sitzungsschlüssels MSK erhält, d.h. also ohne Schlüsselableitung verwendet wird, kein weiterer Schlüssel von dem AAA-Server AAA-S übertragen wird. Dabei ist die erste genannte Option aus Sicherheitssicht vorteilhaft, während die zweite aus Deploymentsicht einfacher erscheint.

Die Identifizierungsinformation gemäß EAP Network Access Identifier NAI hat im Allgemeinen das Format "user@realm" und wird erfindungsgemäß auch in diesem Format genützt, d.h. hinter dem "@" wird die Domäne des AAA-Servers AAA-S angegeben, während nach der Erfindung bei den folgenden Authentisierungsversuchen, d.h. unter Verwendung des gespeicherten Schlüssels M-AAA-KEY aufgrund der Tatsache, dass die Station MESH-AAA die Funktionalität des AAA-Servers AAA-S übernimmt, diese adressiert.

Hierfür bestehen erfindungsgemäß folgende vorteilhafte Ausführungsmöglichkeiten:

Eine Implizite, bei der die erste Kommunikationseinrichtung MP-A auch bei folgenden Anmeldungen dieselbe NAI verwendet und die Station MESH-AAA lediglich anhand der verwendeten EAP-Protokollmethode, wie beispielsweise EAP-PSK, detektiert, dass MESH-AAA das EAP-Protokoll bearbeiten soll und nicht der AAA-Server AAA-S.

Ferner besteht die Möglichkeit, die ursprüngliche NAI umzuformatieren, d.h. eine Zeichenkette an einer beliebigen Stelle der üblichen NAI Form einzufügen, wobei sich hierfür beispielsweise die Bezeichnung der Station MESH-AAA eignet, so dass sich grundsätzlich folgende Möglichkeit bietet "user{mesh-aaa}@realm", "{mesh-aaa}user@realm" oder "user@{mesh-aaa}.realm" als Adressen zu verwenden.

Abschließend besteht auch die Möglichkeit, den Realm der Station MESH-AAA explizit als Realm zu setzen, so dass NAI die Form "user@mesh-aaa" hat.

Die Gültigkeitsdauer des Schlüssels M-AAA-KEY, d.h. seine maximale Lebensdauer oder die so genannte Key Life Time bestimmt sich, durch die Gültigkeitsdauer des Schlüssels M-AAA-KEY. Ist diese abgelaufen, kann damit keine erneute EAP Autenthisierung mit der Station MESH-AAA durchgeführt werden, so dass eine EAP Anmeldung eines Klienten scheitert und dieser Klient daraufhin eine erneute Authentisierung, wie im ersten erfindungsgemäßen Schritt mit dem AAA-Server AAA-S durchführen muss, wodurch wieder ein frischer Schlüssel, dessen Gültigkeitsdauer noch nicht abgelaufen ist, M-AAA-KEY auf der Station MESH-AAA eingerichtet wird.

Vorzugsweise führt dabei diese erste Kommunikationseinrichtung MP-A die Re-Authentifizierung mit dem AAA-Server AAA-S schon einige Zeit vor Ablauf der Gültigkeit des Schlüssels M-AAA-KEY durch.

Eine Variante zu der Nutzung von Secret Keys wie dem Schlüssel M-AAA-KEY besteht darin, dass der AAA-Server AAA-S anstatt des Schlüssels M-AAA-KEY sogenannte AKA-Authentication-Vektoren AV generiert und diese an die Station MESH-AAA sendet, wobei für weitere Authentisierungen von der ersten Kommunikationseinrichtung MP-A innerhalb des Mesh Netzwerkes MESH diese AKA Authentication-Vektoren verwendet werden.

Die dafür geeignete Methode ist die EAP Methode EAP-AKA (gemäß RFC4187).

Der wesentliche Unterschied zwischen einem Schlüssel M-AAA-KEY und einer Menge von AKA Authentication-Vektoren ist, dass der Schlüssel M-AAA-KEY für beliebig viele Authentifikationen innerhalb des Gültigkeitszeitraums verwendet werden kann, wogegen ein AKA-Authentication-Vektor nur für eine Authentifikation verwendet werden kann und danach gewissermaßen verbraucht ist.

Dabei soll erfindungsgemäß der Sitzungsschlüssel MSK oder EMSK der ersten EAP Anmeldung anstatt des Secret Keys verwendet werden, welcher sonst bei AKA zwischen dem dort definierten "Identity Module" und "Home Environment" dauerhaft eingerichtet ist (vgl. RFC4187, Sektion 1). Die erste Kommunikationseinrichtung MP-A verwendet dabei nicht notwendigerweise ein Identity Module, wie beispielsweise eine 3GPP SIM-Karte bzw. eine USIM, sondern führt die entsprechende Operation selbst durch und nutzt hierzu den Sitzungsschlüssel MSK oder EMSK als Secret Key. Ebenso führt die Station MESH-AAA die Operationen des Home Environment durch, d.h. die Generierung der Authentication-Vektoren.

Die zur Generierung gemäß RFC4187, Sektion 1 benötigte Sequenznummer wird bei jedem erfolgreichen Lauf dabei mit dem AAA-Server AAA-S neu initialisiert, beispielsweise mit dem Wert 0. Da dabei auch der AKA Secret Key Schlüssel neu definiert wird, leidet die Sicherheit nicht, so dass insgesamt der Vorteil der Variante überwiegt, dass innerhalb des Gültigkeitszeitraums nicht beliebig viele Authentifikationen durch die Station MESH-AAA durchgeführt werden können, sondern unter Kontrolle des AAA-Server AAA-S nur so viele Authentifikationen durchgeführt werden, wie Authentication-Vektoren bereitgestellt wurden.

Die wesentlichen Vorteile der Erfindung ergeben sich dabei daraus, dass nur die erste EAP-Authentisierung eines Mesh-Knotens von dem AAA-Server AAA-S durchgeführt werden muss, während weitere EAP-Läufe nur noch unter Nutzung der Station MESH-AAA erfolgen.

Weiterhin wird durch das erfindungsgemäße Verfahren aufgrund der Nutzung des Schlüssels M-AAA-KEY für die nachfolgenden EAP-Läufe eine sehr effiziente Secret-Key-basierte Authentisierung durchgeführt, während der AAA-Server AAA-S beliebige EAP-Methoden verwenden kann, auch beispielsweise solche, die rechenaufwändige Zertifikationsprüfungen oder Public-Key-Operationen erfordern, wie beispielsweise EAP-TLS oder PEAP. Der AAA-Server AAA-S wird dadurch nicht durch ständige Authentisierungsversuche belegt bzw. beansprucht und kann dadurch weniger leistungsfähig ausgelegt werden.

In Figur 4 ist der Ablauf der erstmaligen Anmeldung im Sinne des erfindungsgemäßen Verfahrens anhand eines Diagramms dargestellt.

Dabei ist zu erkennen, dass von einer ersten Kommunikationseinrichtung MP-A, welche bei der dargestellten

EP 1 952 574 B1

Anmeldung die Rolle des Supplicants SUPP einnimmt und einer Kommunikationseinrichtung MP-B, welche die Rolle eines Authentikators AUTH einnimmt, ein Verbindungs-Setup gemäß dem Standard IEEE 802.11 erfolgt. Dieser löst in einem nächsten Schritt eine bekannte erste EAP-Authentifikation EAP AUTHENTICATION1 nach dem Stand der Technik aus. Bei dieser kommuniziert die erste Kommunikationsseinrichtung MP-A mit einem AAA-Server AAA-S, der nach erfolgreicher EAP-Authentifikation eine EAP-Success-Meldung EAP-SUCCESS mit einem ersten Sitzungsschlüssel MSK1 sowie Parametern bzw. Attributen der Verbindung POLICY-A, LT-A an eine Station gemäß der Erfindung MESH-AAA überträgt. Diese speichert dann die NAI für die erste Kommunikationsseinrichtung MP-A, einen Schlüssel M-AAA-KEY, welcher von dem Sitzungsschlüssel MSK1 durch eine Schlüsselableitungsfunktion KDF ermittelt worden ist, die Parameter sowie die Attribute POLICY-A, LT-A als dem der ersten Kommunikationseinrichtung MP-A zugeordneten Datensatz ab und sendet bzw. leitet die EAP-Success-Nachricht EAP-SUCCESS an die die Authenticator-Rolle übernehmende Station MP-B weiter, so dass im Folgenden in den bekannten Handshake-Verfahren der EAP-Lauf zum Abschluss kommt. Im Folgenden wird dann, wie aus dem Stand der Technik bekannt, die Rolle des Authenticators und des Supplicants SUPP getauscht und ein erneuter EAP-Lauf EAP-AUTHENTICATION2 auf Grundlage der gemäß des Standes der Technik bekannten NAI durchgeführt, so dass für die Station MP-B die nun in der Rolle der ersten Kommunikationseinrichtung gemäß der Erfindung betrieben wird, ebenfalls ein Sitzungsschlüssel sowie Parameter und Attribute von dem AAA-Server AAA-S an die Station MESH-AAA übertragen werden, so dass ein in analoger Weise zur ersten Kommunikationseinrichtung MP-A ein der Station MP-B zugeordneter Datensatz gespeichert und der EAP-Lauf für die Station MP-B beendet wird, so dass eine Kommunikation zwischen der ersten Kommunikationseinrichtung MP-A und der zweiten Kommunikationseinrichtung MP-B geschützt auf Grundlage des ersten Sitzungsschlüssels MSK1 oder des zweiten Sitzungsschlüssels MSK2 erfolgen kann.

Es ist daher züsammenfassend festzuhalten, dass im Kern das erfindungsgemäße Verfahren so beginnt, dass zunächst weder für die erste Kommunikationseinrichtung MP-A noch für die zweite Station MP-B ein Eintrag auf der Station MESH-AAA vorhanden ist und die erste Authentisierung dabei, wie durch den Stand der Technik bereits bekannt, erfolgt, mit dem Unterschied, dass erfindungsgemäß die Station MESH-AAA bei erfolgreicher Authentisierung einen entsprechenden Eintrag für die jeweilige Kommunikationseinrichtung (Mesh-Knoten) anlegt, wobei dieser der bei der Anmeldung verwendete Identifikationsinformation NAI des jeweiligen Mesh-Knotens, den dem jeweiligen Mesh-Knoten zugeordneten Schlüssel M-AAA-KEY sowie weitere zugeordnete vom AAA-Server AAA-S bereitgestellte Daten, wie beispielsweise die Policy POLICY-A...POLICY-C, Lifetime LT-A...LT-C sowie weitere Attribute, falls vorhanden, enthält.

Nach der Authentisierung ist für das erste Kommunikationsgerät MP-A und das zweite Kommunikationsgerät MP-B auf der Station MESH-AAA jeweils ein Datensatz angelegt, der für weitere Authentisierungen verwendet wird. Beide Stationen übernehmen also einmal die Rolle der ersten Kommunikationseinrichtung nach dem Verfahren gemäß der Erfindung.

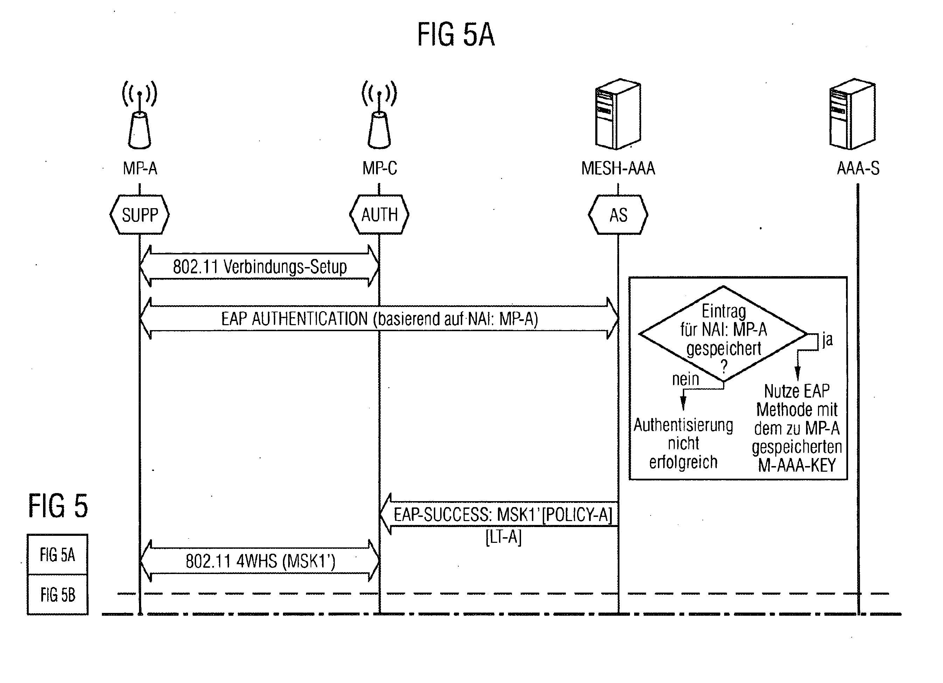

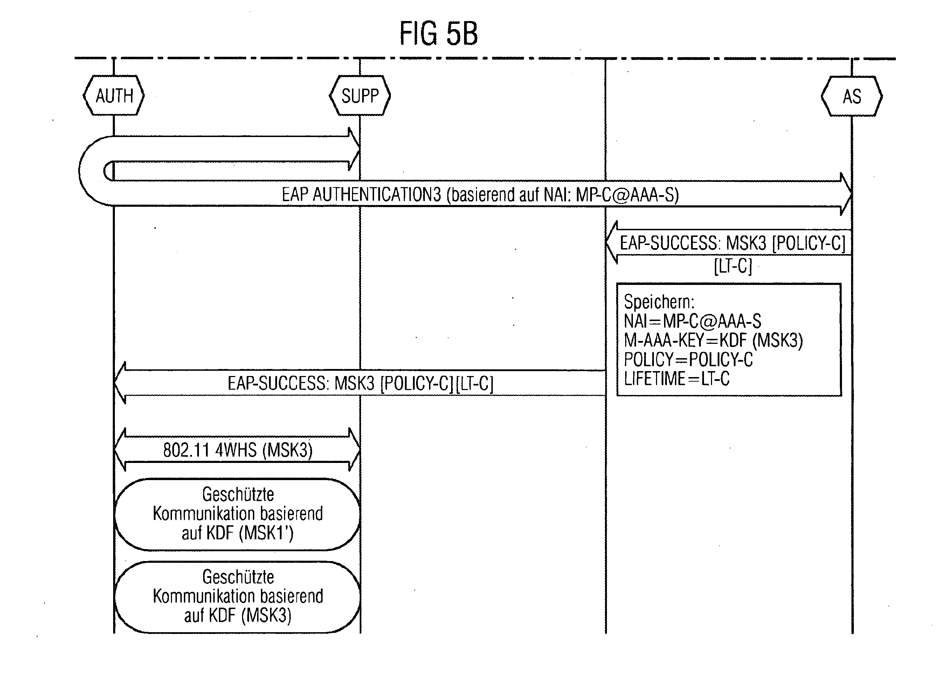

Für die der ersten erstmalig erfolgreichen Authentisierung folgenden Authentisierungen stellt sich der Ablauf wie bei dem in der Figur 5 dargestellten Beispiel wie folgt dar:

Tritt nun eine folgende Authentisierung mit einem ersten Kommunikationsgerät MP-A gegenüber einer dritten Kommunikationseinrichtung MP-C ein, so terminiert das EAP-Protokoll in der Station MESH-AAA, beispielsweise weil die Station detektiert, dass die EAP-Methode EAP-PSK verwendet wird oder, wie dargestellt, weil die folgende Authentisierung EAP-AUTHENTICATION 1' auf Grundlage einer modifizierten NAI MP-A erfolgt, so dass, falls in der Station MESH-AAA ein passender Eintrag für diese NAI zu finden ist, die EAP-Methode auf Grundlage des für diese erste Kommunikationseinrichtung MP-A gespeicherten Schlüssels M-AAA-KEY ausgeführt wird und andernfalls die Authentisierung ohne Erfolg abgebrochen wird.

Zu erkennen ist ferner, dass im Erfolgsfall von der Station MESH-AAA, so wie es gemäß dem Stand der Technik durch den AAA-Server AAA-S erfolgen würde, eine EAP-Success-Nachricht EAP-SUCCESS mit einem Sitzungsschlüssel MSK' sowie Parametern und Attributen POLICY-A, LT-A an die dritte Kommunikationseinrichtung MP-C gesendet wird, so dass letztendlich im 4-Wege-Handshake dieser Schlüssel, welcher als Ableitung des Schlüssels M-AAA-KEY generiert wird, verwendet wird.

Ferner ist zu erkennen, dass bei dem Lauf, in dem nun die dritte Kommunikationseinrichtung MP-C als Supplicant SUPP auftritt, eine Authentisierung, wie sie gemäß dem Stand der Technik erfolgt, durchgeführt wird, da für die dritten Kommunikationseinrichtung MP-C dies die erste Authentisierung in dem Mesh-Netzwerk ist und dies erfindungsgemäß wieder zu einer Speicherung eines dem dritten·Kommunikationsgerät MP-C zugeordneten Schlüssels M-AAA-KEY sowie Parametern und Attributen POLICY-C, LT-C führt. Daraufhin erfolgt eine geschützte Kommunikation zwis·chen der ersten Kommunikationseinrichtung MP-A und der dritten Kommunikationseinrichtung MP-C zum einen auf der Grundlage des ersten Schlüssels gemäß der Erfindung MSK1' sowie des Sitzungsschlüssels für die dritte Kommunikationseinrichtung MSK3.

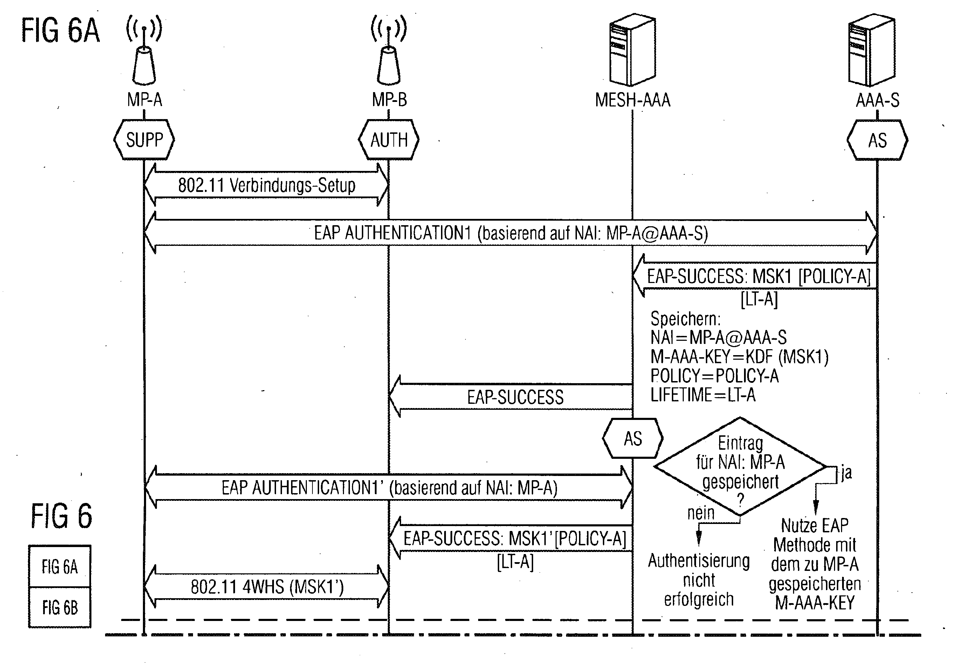

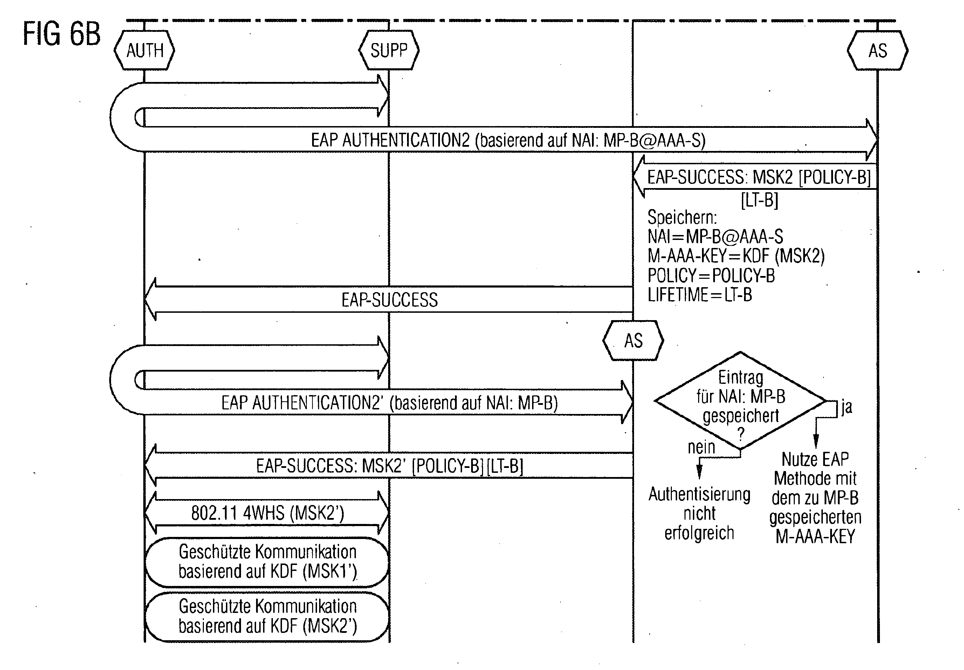

In Figur 6 ist nun eine Variante der erfindungsgemäßen initialen Anmeldung dargestellt.

In dieser Variante dient die Authentisierung mit Hilfe des AAA-Servers AAA-S lediglich dazu, einen Eintrag auf der Station MESH-AAA anzulegen. Danach erfolgt eine weitere EAP-Authentisierung unter Verwendung des eingerichteten Datensatzes.

Das heißt, dass insgesamt bei der ersten Anmeldung einer ersten Kommunikationseinrichtung MP-A zwei EAP-Läufe mit der ersten Kommunikationseinrichtung MP-A in der Supplicant-Rolle SUPP stattfinden, wobei ein Lauf mit dem AAA-Server AAA-S als Authentication-Server erfolgt und ein Lauf mit der Station MESH-AAA in der genannten Rolle.

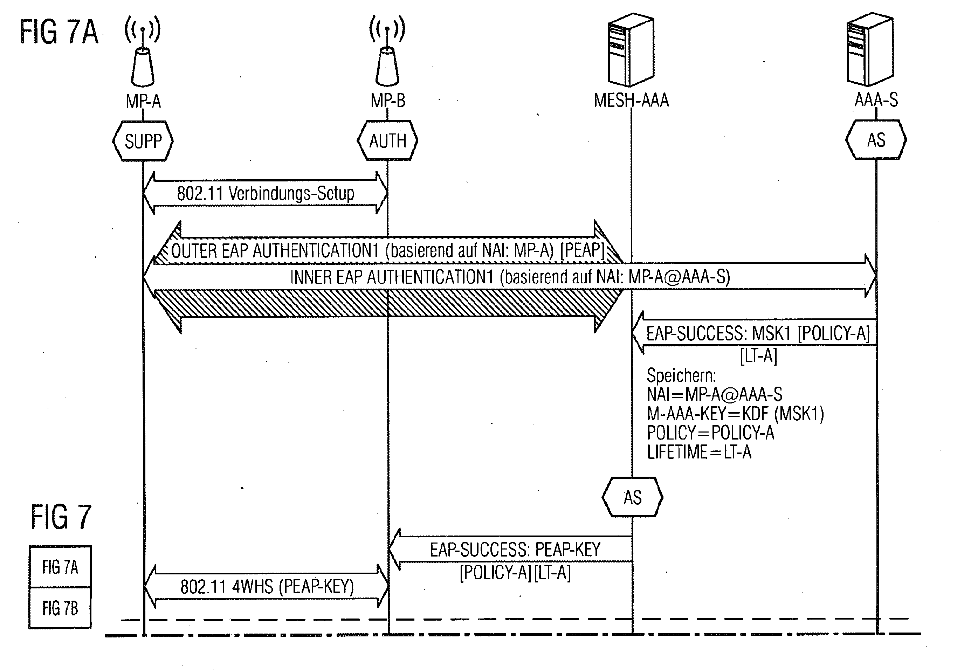

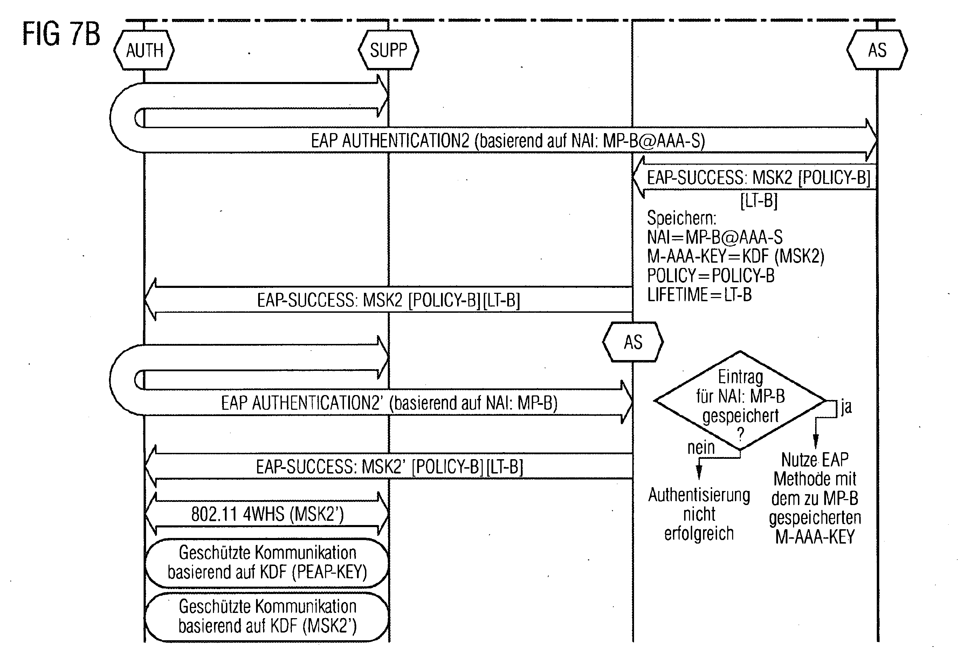

Eine weitere Variante der initialen Anmeldung ist in Figur 7 dargestellt.

Diese Variante besteht darin, dass anstatt zwei getrennter EAP-Läufe eine so genannte getunnelte EAP-Methode, wie sie beispielsweise durch EAP-PEAP gegeben ist, verwendet wird.

Bei dieser Methode ist dabei der Tunnel-Endpunkt der äußeren Methode, die Station MESH-AAA und der Endpunkt der inneren EAP-Methode der AAA-Server AAA-S.

Ferner wird der PEAP-Schlüssel gemäß der PEAP-Spezifizierung abgeleitet, mit dem erfindungsgemäßen Unterschied, dass durch die innere EAP-Methode eingerichtete Sitzungsschlüssel MSK verwendet wird, um den Schüssel M-AAA-KEY abzuleiten.

Die Verwendung von PEAP mit der sogenannten Early Termination, unter der zu verstehen ist, dass innere und äußere EAP-Methoden an unterschiedlichen Knoten terminieren, ist in dem Intel White-Paper "Public WLAN Interworking Study, 2004, Abschnitt 3.2.7 beschrieben.

**Patentansprüche**

1. Verfahren zum Bereitstellen eines drahtlosen lokalen Netzwerks, aufweisend nach dem IEEE 802.11 Standard und seinen Derivaten, insbesondere IEEE 802.15 oder IEEE 802.16, ausgestaltete stationäre Kommunikationseinrichtungen (AP) sowie mobile Kommunikationseinrichtungen (STA, AP, MP-A, MP-B) eines Mesh-Subnetzwerks (MESH), welche an ein Infrastrukturnetzwerk (INFRASTRUKTUR NETZWERK) derart angeschlossen werden, dass es mit einem im Infrastrukturnetzwerk (INFRASTRUKTUR NETZWERK) angeordneten "Authentication, Authorisation, Accounting AAA"-Server (AAA-S) unter Nutzung des "Extensible Authentication Protocol - EAP" Protokolls Authentisierungsnachrichten über eine dem Subnetz zugeordnete Station (MESH-AAA) austauschen kann, **dadurch gekennzeichnet, dass**

    a) nach erfolgreicher erstmaliger Authentisierung einer ersten Kommunikationseinrichtung (STA, AP, MP-A, MP-B) des Subnetzes (MESH) unter Angabe einer ersten Identitätsinformation (NAI) gegenüber einer für die Authentisierung der ersten Kommunikationseinrichtung eine gemäß des EAP Protokolls definierte Rolle eines "Authenticators" erfüllenden Kommunikationseinrichtung (STA, AP, MP-A, MP-B) des Subnetzes (MESH), der AAA-Server (AAA-S) innerhalb eines ersten Gültigkeitszeitraums genau einmal eine für das Subnetz (MESH) gültige Verschlüsselungsbasisinformation generiert,
    b) die Verschlüsselungsbasisinformation einer dem Subnetz (MESH) eindeutig zuordenbaren Station (MESH-AAA) übermittelt wird,
    c) die Station (Mesh-AAA) zumindest die Verschlüsselungsbasisinformation speichert und sie der von der ersten Kommunikationseinrichtung (STA, AP, MP-A, MP-B) angegebenen Identitätsinformation (NAI) zuordnet,
    d) die Station (Mesh-AAA) der erstmaligen Authentisierung folgende Authentisierungsversuche der ersten Kommunikationseinrichtung (STA, AP, MP-A, MP-B) gegenüber einer zweiten Kommunikationseinrichtung (STA, AP, MP-A, MP-B) des Subnetzes (MESH) unter Angabe einer zweiten Identitätsinformation (NAI') nach Art eines Proxy-Servers unter Auslassung des AAA-Servers auf Grundlage der durch die angegebene Identitätsinformation (NAI') bestimmte Verschlüsselungsbasisinformation unter Nutzung des "Extensible Authentication Protocol - EAP" Protokolls abwickelt,
    e) die Station (Mesh-AAA) der zweiten Kommunikationseinrichtung einen für die zweite Kommunikationseinrichtung unter Verwendung der gespeicherten Verschlüsselungsbasisinformation ermittelten Schlüssel zur kryptographisch gesicherten Kommunikation mit der ersten Kommunikationseinrichtung bereitstellt.

2. Verfahren nach Anspruch 1, **dadurch gekennzeichnet, dass** die Verschlüsselungsbasisinformation als Information zumindest einen Verschlüsselungsschlüssel enthält.

3. Verfahren nach Anspruch 2, **dadurch gekennzeichnet, dass** die Station den Verschlüsselungsschlüssel als einen dem ersten Kommunikationsendgerät zugeordneten Schlüssel (M-AAA-KEY) speichert.

4. Verfahren nach Anspruch 3, **dadurch gekennzeichnet, dass** zur Abwicklung der Authentisierungsversuche der gespeicherte Verschlüsselungsschlüssel (M-AAA-KEY) verwandt wird.

5. Verfahren nach Anspruch 2, **dadurch gekennzeichnet, dass** die Station aus dem Verschlüsselungsschlüssel einen Schlüssel ableitet und als einen dem ersten Kommunikationsgerät zugeordneten Schlüssel (M-AAA-KEY) speichert.

6. Verfahren nach Anspruch 2, **dadurch gekennzeichnet, dass** der AAA-Server aus dem Verschlüsselungsschlüssel einen Schlüssel ableitet und als einen dem ersten Kommunikationsgerät zugeordneten Schlüssel (M-AAA-KEY) und im Rahmen der erstmaligen Authentisierung als Teil der Verschlüsselungsinformation übermittelt.

7. Verfahren nach einem der Ansprüche 2 bis 6, **dadurch gekennzeichnet, dass** die Übermittlung des zugeordneten Schlüssels mit einer gemäß EAP-Protokoll als "EAP-Success"-Nachricht (EAP-SUCCESS) ausgestalteten Nachricht erfolgt.

8. Verfahren nach einem der Ansprüche 5 bis 6 und oder Anspruch 7 soweit dieser den Gegenstand nach Anspruch 5 oder 6 umfasst, **dadurch gekennzeichnet, dass** die Ableitung derart erfolgt, dass der zugeordnete Schlüssel mittels einer Schlüsselableitungsfunktion auf Grundlage eines gemäß dem EAP-Protokoll gebildeten "Master Session Key, MSK"-Schlüssels erzeugt wird.

9. Verfahren nach einem der Ansprüche 5 bis 6 oder Anspruch 7 soweit dieser den Gegenstand nach Anspruch 5 oder 6 umfasst, **dadurch gekennzeichnet, dass** die Ableitung derart erfolgt, dass der zugeordnete Schlüssel mittels einer Schlüsselableitungsfunktion auf Grundlage eines gemäß EAP-Protokoll gebildeten "Extended Master Session Key, EMSK" erzeugt wird.

10. Verfahren nach einem der Ansprüche 5 bis 9, **dadurch gekennzeichnet, dass** die Ableitung durch den AAA-Server (AAA-S) erfolgt.

11. Verfahren nach einem der Ansprüche 5 bis 9, **dadurch gekennzeichnet, dass** die Ableitung durch die Station (MESH-AAA) erfolgt.

12. Verfahren nach einem der Ansprüche 9 bis 11, **dadurch gekennzeichnet, dass** als Schlüsselableitungsfunktion des zugeordneten Verschlüsselungsschlüssels (M-AAA-KEY) eine Funktion gemäß einer kryptographischen, insbesondere SHA-1, SHA256 oder MD5, Hash-Funktion verwendet wird.

13. Verfahren nach einem der Ansprüche 9 oder einem der Ansprüche 10 bis 12 soweit diese den Gegenstand nach Anspruch 9 oder 12 umfassen, **dadurch gekennzeichnet, dass** die Schlüsselableitungsfunktion (KDF) des zugeordneten Verschlüsselungsschlüssels (M-AAA-KEY) auf "Keyed-Hash-Funktionen", insbesondere HMAC nach RFC2104, basiert.

14. Verfahren nach einem der vorhergehenden Ansprüche, **dadurch gekennzeichnet, dass** der zugeordnete Verschlüsselungsschlüssel gemäß folgender auf Schlüsselableitungsfunktionen basierender Formel
M-AAA-KEY = HMAC-SHA1(MSK, "Mesh-AAA-Key")
gebildet wird, wobei mit
M-AAA-KEY der zugeordnete Schlüssel,
HMAC-SHA1 eine Keyed Hash Funktion HMAC unter Verwendung der Hash-Funktion SHA-1
bezeichnet ist, und mit
MSK der gemäß EAP-Protokoll ermittelte "Master Session Key" und mit
Mesh-AAA-Key eine Zeichenkette, die insbesondere den Verwendungszweck des Schlüssels wiedergibt,
bezeichnet ist.

15. Verfahren nach Anspruch 8 oder 9, **dadurch gekennzeichnet, dass** die Ableitung derart erfolgt, dass der zugeordnete Schlüssel mit dem nach dem EAP-Protokoll gebildeten "Master Session Key, MSK"-Schlüssel oder dem "Extended Master Session Key, EMSK"-Schlüssel Identität aufweist.

16. Verfahren nach einem der vorhergehenden Ansprüche, **dadurch gekennzeichnet, dass** der erste Gültigkeitszeitraum der Gültigkeitsdauer eines gemäß EAP-Protokolls gebildeten "Master Session Key" und/oder "Extended Master Session Key" entspricht.

17. Verfahren nach einem der vorhergehenden Ansprüche, **dadurch gekennzeichnet, dass** ein die Gültigkeitsdauer des zugeordneten Schlüssels bestimmender zweiter Gültigkeitszeitraum der der Gültigkeitsdauer eines gemäß EAP-Protokolls gebildeten "Master Session Key" entspricht.

**18.** Verfahren nach einem der Ansprüche 1 bis 16, **dadurch gekennzeichnet, dass** eine Gültigkeitsdauer des zugeordneten Schlüssels bestimmender zweiter Gültigkeitszeitraum durch eine festgelegte Anzahl zulässiger Authentifizierungen bestimmt wird.

**19.** Verfahren nach einem der vorhergehenden Ansprüche, **dadurch gekennzeichnet, dass** als Station ein das Subnetz (MESH) mit dem Infrastrukturnetz verbindender Umsetzer (GW) genutzt wird.

**20.** Verfahren nach einem der vorhergehenden Ansprüche, **dadurch gekennzeichnet, dass** der Verschlüsselungsinformation Netzwerkattribute bestimmende Parameter, insbesondere eine so genannte "Policy" wie die maximale Bandbreite, QoS-Reservierungen, die Gültigkeitsdauer, nutzerbezogene Kontoinformationen und/oder Verkehrsfilterregel, beigefügt werden.

**21.** Verfahren nach einem der vorhergehenden Ansprüche, **dadurch gekennzeichnet, dass** die der ersten Authentisierung folgenden Authentisierungen nach der gemäß EAP-Protokoll spezifizierten EAP-PSK Methode erfolgt.

**22.** Verfahren nach einem der Ansprüche 4 bis 21, **dadurch gekennzeichnet, dass** die Abwicklung nach Art eines Proxy-Servers derart erfolgt, dass nach der erstmaligen erfolgten Authentisierung die Auslassung des AAA-Servers durch Terminieren von gemäß EAP-Protokoll gebildeten Nachrichten in der Station erfolgt, wobei ein Terminieren in Abhängigkeit von mit den Nachrichten korrelierenden Informationen durchgeführt wird.

**23.** Verfahren nach dem vorhergehenden Anspruch, **dadurch gekennzeichnet, dass** als korrelierende Information die Art der verwendeten EAP-Protokoll Methode detektiert wird.

**24.** Verfahren nach dem Anspruch 22, **dadurch gekennzeichnet, dass** als korrelierende Information die "Network Access Identifier, NAI", welche insbesondere einen Aufbau der Form user@realm
aufweist, wobei
user die die Nachricht absendende Station bezeichnet und realm die, insbesondere durch einen AAA-Server bereitgestellte, Domäne bezeichnet,
derart manipuliert wird, dass sich aus der mit den Nachrichten korrelierenden Informationen die Station als Adressat ergibt.

**25.** Verfahren nach dem vorhergehenden Anspruch, **dadurch gekennzeichnet, dass** als Manipulation dem NAI, insbesondere durch Trennungszeichen isoliert, eine die Station bezeichnende Zeichenkette hinzugefügt wird und dass die NAI insbesondere die Form "{mesh-aaa}user@realm", "user{mesh-aaa}@realm" oder "user@{mesh-aaa}.realm" aufweist.

**26.** Verfahren nach dem Anspruch 24, **dadurch gekennzeichnet, dass** als Manipulation der Domänenbezeichnung die Bezeichnung der Station gesetzt wird und insbesondere die Form "user@mesh-aaa" aufweist.

**27.** Verfahren nach einem der vorhergehenden Ansprüche, **dadurch gekennzeichnet, dass** nach Ablauf des Gültigkeitszeitraums weitere Authentisierungen nur nach erneuter, insbesondere vor Ablauf des Gültigkeitszeitraums durchgeführter, erstmaliger Authentisierung beim AAA-Server erfolgreich sind.

**28.** Verfahren nach einem der vorhergehenden Ansprüche, **dadurch gekennzeichnet, dass** die Verschlüsselungsbasisinformation als Information zumindest einen nach Art des gemäß RFC4187 Sektion 1 gebildeten AKA-Authentisierungsvektor enthält.

**29.** Verfahren nach einem der vorhergehenden Ansprüche, **dadurch gekennzeichnet, dass** für die Bildung eines AKA-Verschlüsselungsvektors ein gemäß EAP-Protokoll gebildeter "Master Session Key, MSK" als nach Art des AKA erforderlicher geheimer Schlüssel "secret key" gesetzt wird.

**30.** Anordnung zum Bereitstellen eines drahtlosen lokalen Netzwerks, **gekennzeichnet durch** Mittel zur Durchführung des Verfahrens nach einem der vorhergehenden Ansprüche.

**Claims**

**1.** Method for providing a wireless local area network, having stationary communication devices (AP) and mobile communication devices (STA, AP, MP-A, MP-B) developed according to the IEEE 802.11 standard and its derivatives, in particular IEEE 802.15 or IEEE 802,16, of a mesh subnetwork (MESH), said devices being connected to an infrastructure network (INFRASTRUKTUR NETZWERK) in such a manner that said infrastructure network can exchange authentication messages with an Authentication, Authorization, Accounting AAA server (AAA-S) located in the infrastructure network (INFRASTRUKTUR NETZWERK) via a station (MESH-AAA) assigned to the subnetwork using the Extensible Authentication Protocol - EAP, **characterized in that**

a) after successful first-time authentication of a first communication device (STA, AP, MP-A, MP-B) of the subnetwork (MESH) with specification of first identify information (NAI) in relation to a communication device (STA, AP, MP-A, MP-B) of the subnetwork (MESH) fulfilling a role of an authenticator defined according to the EAP protocol for the authentication of the first communication device, the AAA server (AAA-S) generates basic encryption information valid for the subnetwork (MESH) precisely once within a first validity period,

b) the basic encryption information is transmitted to a station (MESH-AAA) that can be uniquely assigned to the subnetwork (MESH),

c) the station (Mesh-AAA) stores at least the basic encryption information and assigns it to the identity information (NAL) specified by the first communication device (STA, AP, MP-A, MP-B),

d) the station (Mesh-AAA) handles authentication attempts following the first-time authentication of the first communication device (STA, AP, MP-A, MP-B) in relation to a second communication device (STA, AP, MP-A, MP-B) of the subnetwork (MESH) with specification of second identity information (NAL') in the manner of a proxy server whilst omitting the AAA server on the basis of the basic encryption information determined by the specified identity information (NAL') using the Extensible Authentication Protocol - EAP,

e) the station (Mesh-AAA) of the second communication device provides a key determined for the second communication device using the stored basic encryption information for cryptographically secured communication with the first communication device.

2. Method according to Claim 1, **characterized in that** the basic encryption information includes as information at least one encryption key.

3. Method according to Claim 2, **characterized in that** the station stores the encryption key as a key (M-AAA-KEY) assigned to the first communication terminal.

4. Method according to Claim 3, **characterized in that** the stored encryption key (M-AAA-KEY) is used for handling the authentication attempts.

5. Method according to Claim 2, **characterized in that** the station derives a key from the encryption key and stores it as a key (M-AAA-KEY) assigned to the first communication device.

6. Method according to Claim 2, **characterized in that** the AAA server derives a key from the encryption key and transmits it as a key (M-AAA-KEY) assigned to the first communication device as part of the basic encryption information within the framework of the first-time authentication.

7. Method according to one of Claims 2 to 6, **characterized in that** the transmitting of the assigned key is effected with a message developed according to the EAP protocol as an EAP success message (EAP-SUCCESS).

8. Method according to one of Claims 5 to 6 and or Claim 7 in so far as said claim includes the object according to Claim 5 or 6, **characterized in that** the derivation is effected in such a manner that the assigned key is generated by means of a key derivation function on the basis of a Master Session Key, EMSK formed according to the EAP protocol.

9. Method according to one of Claims 5 to 6 or Claim 7 in so far as said claim includes the object according to Claim 5 or 6, **characterized in that** the derivation is effected in such a manner that the assigned key is generated by means of a key derivation function on the basis of an Extended Master Session Key, EMSK formed according to the EAP protocol.

10. Method according to one of Claims 5 to 9, **characterized in that** the derivation is effected by the AAA server (AAA-S).

11. Method according to one of Claims 5 to 9, **characterized in that** the derivation is effected by the station (MESH-AAA).

**12.** Method according to one of Claims 9 to 11, **characterized in that** a function according to a cryptographic hash function, in particular SHA-1, SHA256 or MD5, is used as the key derivation function of the assigned encryption key (M-AAA-KEY).

**13.** Method according to one of Claims 9 or one of Claims 10 to 12 in so far as said claims include the object according to Claim 9 or 12, **characterized in that** the key derivation function (KDF) of the assigned encryption key (M-AAA-KEY) is based on keyed hash functions, in particular HMAC to RFC2104.

**14.** Method according to one of the preceding Claims, **characterized in that** the assigned encryption key is formed according to the following formula based on key derivation functions
M-AAA-KEY = HMAC-SHA1 (MSK, Mesh-AAA-Key), wherein
M-AAA-KEY denotes the assigned key
HMAC-SHA1 denotes a keyed hash function HMAC using the hash function SHA-1, and
MSK denotes the master session key determined according to the EAP protocol and
Mesh-AAA-Key denotes a character string that in particular reproduces the intended purpose of the key.

**15.** Method according to Claim 8 or 9, **characterized in that** the derivation is effected in such a manner that the assigned key is identical to the master session key, MSK, or to the extended master session key, EMSK, formed according to the EAP protocol.

**16.** Method according to one of the preceding claims, **characterized in that** the first period of validity corresponds to the period of validity of a master session key and/or extended master session key formed according to the EAP protocol.

**17.** Method according to one of the preceding Claims, **characterized in that** a second period of validity determining the period of validity of the assigned key corresponds to the period of validity of a master session key formed according to the EAP protocol.

**18.** Method according to one of Claims 1 to 16, **characterized in that** a second period of validity determining a period of validity of the assigned key is determined by a fixed number of allowable authentications.

**19.** Method according to one of the preceding claims, **characterized in that** a converter (GW) connecting the subnetwork (MESH) to the infrastructure network is used as a station.

**20.** Method according to one of the preceding claims, **characterized in that** parameters determining network attributes, in particular a so-called policy such as the maximum band width, QoS reservations, the period of validity, user-related account information and/or traffic filter rules, are added to the encryption information.

**21.** Method according to one of the preceding claims, **characterized in that** the authentications following the first authentication are effected according to the EAP-PSK method specified in accordance with the EAP protocol.

**22.** Method according to one of Claims 4 to 21, **characterized in that** the handling is effected in the manner of a proxy server in such a way that after the first-time authentication has been effected, the AAA server is omitted in the station by terminating messages formed according to the EAP protocol, wherein termination is executed in dependence on information correlating with the messages.

**23.** Method according to the preceding Claim, **characterized in that** the type of EAP protocol method used is detected as correlating information.

**24.** Method according to Claim 22, **characterized in that** the network access identifier, NAI, which in particular is structured in the form of user@realm, wherein user denotes the station sending the message and realm denotes the domain provided in particular by an AAA server, is manipulated as correlating information in such a manner that the station is produced as the addressee from the information correlating with the messages.

**25.** Method according to the preceding Claim, **characterized in that** as manipulation, a character string denoting the station is added to the NAI, in particular isolated by separation characters, and **in that** the NAI in particular has the form of "(mesh-aaa)user@realm", "user(mesh-aaa)@realm" or "user@(mesh-aaa).realm".

**26.** Method according to Claim 24, **characterized in that** the identification of the station is used as manipulation of the domain identification and is in particular in the form of "user@mesh-aaa".

**27.** Method according to one of the preceding claims, **characterized in that** after expiry of the period of validity, further authentications are only successful after a new first-time authentication with the AAA server, in particular carried out before expiry of the period of validity.

**28.** Method according to one of the preceding claims, **characterized in that** the basic encryption information includes as information at least one AKA authentication vector in the manner of that formed according to Section 1 RFC4187.

**29.** Method according to one of the preceding claims, **characterized in that** a master session key, MSK, formed according to the EAP protocol is set as a secret key necessary in the manner of the AKA for the formation of an AKA encryption vector.

**30.** Arrangement for providing a wireless local area network, **characterized by** means for executing the method according to one of the preceding claims.


**Revendications**

**1.** Procédé de mise à disposition d'un réseau local sans fil, comportant des dispositifs de communication (AP) stationnaires conçus selon la norme IEEE 802.11 et ses dérivées, en particulier selon les normes IEEE 802.15 ou IEEE 802.16, ainsi que des dispositifs de communication mobiles (STA, AP, MP-A, MP-B) d'un sous-réseau maillé (MESH), lesquels dispositifs étant reliés à un réseau d'infrastructure (INFRASTRUKTUR NETZWERK) de manière telle qu'il puisse échanger des messages d'authentification avec un serveur AAA (Authentication, Authorisation, Accounting) (AAA-S) disposé dans le réseau d'infrastructure (INFRASTRUKTUR NETZWERK) à l'aide du protocole d'authentification extensible (EAP) et par le biais d'une station (MESH-AAA) affectée au sous-réseau, **caractérisé en ce que**

a) après la première authentification réussie d'un premier dispositif de communication (STA, AP, MP-A, MP-B) du sous-réseau (MESH) en indiquant une première information d'identité (NAI) par rapport à un dispositif de communication (STA, AP, MP-A, MP-B) du sous-réseau (MESH) remplissant le rôle d'un « authentificateur » défini selon le protocole EAP pour l'authentification du premier dispositif de communication, le serveur AAA (AAA-S) génère au cours d'une première période temporelle de validité exactement une fois une information de base de chiffrement valide pour le sous-réseau (MESH),

b) l'information de base de chiffrement est transmise à une station (MESH-AAA) pouvant être affectée de manière univoque au sous-réseau (MESH),

c) la station (Mesh-AAA) enregistre au moins l'information de base de chiffrement et l'affecte à l'information d'identité (NAI) indiquée par le premier dispositif de communication (STA, AP, MP-A, MP-B),

d) la station (Mesh-AAA) de la première authentification réalise, en utilisant le protocole EAP (Extensible Authentication Protocol), des essais subséquents d'authentification du premier dispositif de communication (STA, AP, MP-A, MP-B) par rapport à un deuxième dispositif de communication (STA, AP, MP-A, MP-B) du sous-réseau (MESH) en indiquant une deuxième information d'identité (NAI') à la façon d'un serveur mandataire en omettant le serveur AAA sur la base de l'information de base de chiffrement définie par l'information d'identité (NAI') indiquée,

e) la station (Mesh-AAA) du deuxième dispositif de communication met à disposition une clé, déterminée pour le deuxième dispositif de communication en employant l'information de base de chiffrement enregistrée, à des fins de communication sécurisée par chiffrement avec le premier dispositif de communication.

**2.** Procédé selon la revendication 1, **caractérisé en ce que** l'information de base de chiffrement contient en tant qu'information au moins une clé de chiffrement.

**3.** Procédé selon la revendication 2, **caractérisé en ce que** la station enregistre la clé de chiffrement en tant que clé affectée au premier appareil de communication (M-AAA-KEY).

**4.** Procédé selon la revendication 3, **caractérisé en ce que** la clé de chiffrement (M-AAA-KEY) enregistrée est employée pour la réalisation des essais d'authentification.

**5.** Procédé selon la revendication 2, **caractérisé en ce que** la station déduit une clé à partir de la clé de chiffrement et l'enregistre en tant que clé (M-AAA-KEY) affectée au premier appareil de communication.

6.  Procédé selon la revendication 2, **caractérisé en ce que** le serveur AAA-Server déduit une clé à partir de la clé de chiffrement et la transmet en tant que clé (M-AAA-KEY) affectée au premier appareil de communication et en tant que partie de l'information de chiffrement dans le cadre de la première authentification.

7.  Procédé selon l'une des revendications 2 à 6, **caractérisé en ce que** la transmission de la clé affectée a lieu avec un message conçu selon le protocole EAP en tant que message « EAP-Success » (EAP-SUCCESS).

8.  Procédé selon l'une des revendications 5 à 6 et/ou la revendication 7 dans la mesure où cette dernière comporte l'objet selon la revendication 5 ou 6, **caractérisé en ce que** la déduction a lieu de manière telle que la clé affectée soit générée au moyen d'une fonction de déduction de clé sur la base d'une clé MSK (Master Session Key - clé de session maître) formée selon le protocole EAP.

9.  Procédé selon l'une des revendications 5 à 6 ou la revendication 7 dans la mesure où cette dernière comporte l'objet selon la revendication 5 ou 6, **caractérisé en ce que** la déduction a lieu de manière telle que la clé affectée soit générée au moyen d'une fonction de déduction de clé sur la base d'une clé EMSK (Extended Master Session Key - clé de session maître étendue) selon le protocole EAP.

10. Procédé selon l'une des revendications 5 à 9, **caractérisé en ce que** la déduction a lieu par le biais du serveur AAA (AAA-S).

11. Procédé selon l'une des revendications 5 à 9, **caractérisé en ce que** la déduction a lieu par le biais de la station (MESH-AAA).

12. Procédé selon l'une des revendications 9 à 11, **caractérisé en ce que** la fonction de déduction de clé employée pour la clé de chiffrement (M-AAA-KEY) affectée est une fonction de hachage cryptographique, en particulier SHA-1, SHA256 ou MD5.

13. Procédé selon l'une des revendications 9 ou une des revendications 10 à 12 dans la mesure où ces dernières comportent l'objet selon la revendication 9 ou 12, **caractérisé en ce que** la fonction de déduction de clé (KDF) de la clé de chiffrement (M-AAA-KEY) affectée est basée sur des fonctions de hachage avec clé, en particulier HMAC selon la recommandation RFC2104.

14. Procédé selon l'une quelconque des revendications précédentes, **caractérisé en ce que** la clé de chiffrement affectée est formée selon la formule suivante basée sur des fonctions de déduction de clé
    M-AAA-KEY = HMAC-SHA1(MSK, 'Mesh-AAA-Key')
    avec
    M-AAA-KEY désigne la clé affectée,
    HMAC-SHA1 désigne une fonction de hachage avec clé HMAC employant la fonction de hachage SHA-1, et
    MSK désigne la clé de session maître déterminée selon le protocole EAP et Mesh-AAA-Key désigne une chaîne de clés qui reproduit en particulier l'objectif d'utilisation de la clé.

15. Procédé selon la revendication 8 ou 9, **caractérisé en ce que** la déduction a lieu de manière telle que la clé affectée comporte l'identité avec la clé MSK (clé de session maître) ou la clé EMSK (clé de session maître étendue) formées selon le protocole EAP.

16. Procédé selon l'une quelconque des revendications précédentes, **caractérisé en ce que** la première période temporelle de validité correspond à la durée de validité d'une clé MSK (clé de session maître) et/ou d'une clé EMSK (clé de session maître étendue) formées selon le protocole EAP.

17. Procédé selon l'une quelconque des revendications précédentes, **caractérisé en ce qu'**une deuxième période temporelle de validité déterminant la durée de validité de la clé affectée correspond à la durée de validité d'une clé de session maître formée selon le protocole EAP.

18. Procédé selon l'une des revendications 1 à 16, **caractérisé en ce qu'**une deuxième période temporelle de validité déterminant la durée de validité de la clé affectée est déterminée par un nombre défini d'authentifications autorisées.

**19.** Procédé selon l'une quelconque des revendications précédentes, **caractérisé en ce qu'**un réémetteur (GW) reliant le sous-réseau (MESH) avec le réseau d'infrastructure sert de station.

**20.** Procédé selon l'une quelconque des revendications précédentes, **caractérisé en ce que** l'information de chiffrement se voit adjoindre des paramètres déterminant des attributs de réseau, en particulier ce que l'on appelle une « politique », telle que la largeur de bande maximale, des réservations de qualité de service, la durée de validité, des informations de compte relatives aux utilisateurs et/ou des règles de filtrage de trafic.

**21.** Procédé selon l'une quelconque des revendications précédentes, **caractérisé en ce que** les authentifications suivant la première authentification ont lieu selon le procédé EAP-PSK spécifié selon le protocole EAP.

**22.** Procédé selon l'une des revendications 4 à 21, **caractérisé en ce que** la réalisation à la façon d'un serveur mandataire a lieu de manière telle que, après la première authentification effectuée, l'omission du serveur AAA ait lieu en terminant les messages formés selon le protocole EAP dans la station, cette opération ayant lieu en fonction des informations mettant en corrélation les messages.

**23.** Procédé selon la revendication précédente, **caractérisé en ce que** le type de procédé employant le protocole EAP est détecté en tant qu'information de corrélation.

**24.** Procédé selon la revendication 22, **caractérisé en ce que**, en tant qu'information de corrélation, l'information NAI (Network Access Identifier - Identifiant d'accès au réseau), qui comporte en particulier une structure de la forme user@realm, avec 'user' désignant la station envoyant le message et 'realm' désignant les domaines mis à disposition en particulier par un serveur AAA, est manipulée de manière telle qu'il résulte des informations mettant en corrélation les messages que la station est l'adresse de destination.

**25.** Procédé selon la revendication précédente, **caractérisé en ce que**, en tant que manipulation, une chaîne de caractères désignant la station est ajoutée à l'information NAI, en particulier isolée par des caractères de séparation, et **en ce que** l'information NAI présente en particulier la forme « {mesh-aaa}user@realm », « user(mesh-aaa)@realm » ou « user@{mesh-aaa).realm ».

**26.** Procédé selon la revendication 24, **caractérisé en ce que** la désignation de la station est mise en oeuvre en tant que manipulation de la désignation du domaine et présente en particulier la forme « user@mesh-aae ».

**27.** Procédé selon l'une quelconque des revendications précédentes, **caractérisé en ce que**, après l'expiration de la période temporelle de validité, d'autres authentifications réussissent uniquement après une nouvelle première authentification, effectuée en particulier avant l'expiration de la période temporelle de validité, auprès du serveur AAA-S.

**28.** Procédé selon l'une quelconque des revendications précédentes, **caractérisé en ce que** l'information de base de chiffrement contient en tant qu'information au moins un vecteur d'authentification selon le protocole AKA formé selon la recommandation RFC4187 section 1.

**29.** Procédé selon l'une quelconque des revendications précédentes, **caractérisé en ce que**, pour la formation d'un vecteur de chiffrement selon le protocole AKA, une clé MSK (clé de session maître) formée selon le protocole EAP est mise en oeuvre en tant que clé secrète « secret key » nécessaire selon le type de protocole AKA.

**30.** Dispositif de mise à disposition d'un réseau local sans fil, **caractérisé par** des moyens permettant d'effectuer le procédé selon l'une quelconque des revendications précédentes.

# FIG 1

## Stand der Technik

EP 1 952 574 B1

# FIG 2

Stand der Technik

STA           AP          AAA-S

SUPP         AUTH         AS

802.11 Verbindungs-Setup

EAP AUTHENTICATION

EAP-SUCCESS: MSK [POLICY-STA]

802.11 4WHS (MSK)

Geschützte Kommunikation

EP 1 952 574 B1

# FIG 3
## Stand der Technik

MP-A          MP-B          AAA-S

SUPP          AUTH          AS

802.11 Verbindungs-Setup

EAP AUTHENTICATION1

EAP-SUCCESS: MSK1 [POLICY-STA]

802.11 4WHS (MSK1)

AUTH          SUPP          AS

EAP AUTHENTICATION2

EAP-SUCCESS: MSK2 [POLICY-STA]

802.11 4WHS (MSK2)

Geschützte
Kommunikation basierend
auf KDF (MSK1)

Geschützte
Kommunikation basierend
auf KDF (MSK2)

# FIG 4A

MP-A       MP-B       MESH-AAA       AAA-S

SUPP       AUTH       AS

802.11 Verbindungs-Setup

EAP AUTHENTICATION1 (basierend auf NAI: MP-A@AAA-S)

EAP-SUCCESS: MSK1 [POLICY-A] [LT-A]

Speichern:
NAI=MP-A@AAA-S
M-AAA-KEY=KDF (MSK1)
POLICY=POLICY-A
LIFETIME=LT-A

EAP-SUCCESS: MSK1 [POLICY-A] [LT-A]

## FIG 4

| FIG 4A |
|--------|
| FIG 4B |

802.11 4WHS (MSK1)

EP 1 952 574 B1

# FIG 4B

EAP AUTHENTICATION2 (basierend auf NAI: MP-B@AAA-S)

EAP-SUCCESS: MSK2 [POLICY-B] [LT-B]

Speichern:
NAI=MP-B@AAA-S
M-AAA-KEY=KDF (MSK2)
POLICY=POLICY-B
LIFETIME=LT-B

EAP-SUCCESS: MSK2 [POLICY-B][LT-B]

802.11 4WHS (MSK2)

Geschützte Kommunikation basierend auf KDF (MSK1)

Geschützte Kommunikation basierend auf KDF (MSK2)

EP 1 952 574 B1

# FIG 5A

MP-A        MP-C        MESH-AAA        AAA-S

SUPP        AUTH        AS

802.11 Verbindungs-Setup

EAP AUTHENTICATION (basierend auf NAI: MP-A)

Eintrag
für NAI: MP-A
gespeichert
?

ja

nein

Nutze EAP
Methode mit
dem zu MP-A
gespeicherten
M-AAA-KEY

Authentisierung
nicht
erfolgreich

## FIG 5

EAP-SUCCESS: MSK1'[POLICY-A]
[LT-A]

| FIG 5A |
| --- |
| FIG 5B |

802.11 4WHS (MSK1')

EP 1 952 574 B1

# FIG 5B

AUTH　　　　　SUPP　　　　　　　　　　　　　AS

EAP AUTHENTICATION3 (basierend auf NAI: MP-C@AAA-S)

EAP-SUCCESS: MSK3 [POLICY-C]
[LT-C]

Speichern:
NAI=MP-C@AAA-S
M-AAA-KEY=KDF (MSK3)
POLICY=POLICY-C
LIFETIME=LT-C

EAP-SUCCESS: MSK3 [POLICY-C][LT-C]

802.11 4WHS (MSK3)

Geschützte
Kommunikation basierend
auf KDF (MSK1')

Geschützte
Kommunikation basierend
auf KDF (MSK3)

EP 1 952 574 B1

MP-A    MP-B    MESH-AAA    AAA-S

SUPP    AUTH    AS

802.11 Verbindungs-Setup

EAP AUTHENTICATION1 (basierend auf NAI: MP-A@AAA-S)

EAP-SUCCESS: MSK1 [POLICY-A] [LT-A]

Speichern:
NAI=MP-A@AAA-S
M-AAA-KEY=KDF (MSK1)
POLICY=POLICY-A
LIFETIME=LT-A

EAP-SUCCESS

AS

EAP AUTHENTICATION1' (basierend auf NAI: MP-A)

Eintrag für NAI: MP-A gespeichert ?

ja

nein

FIG 6

EAP-SUCCESS: MSK1'[POLICY-A] [LT-A]

Authentisierung nicht erfolgreich

Nutze EAP Methode mit dem zu MP-A gespeicherten M-AAA-KEY

802.11 4WHS (MSK1')

| FIG 6A |
| --- |
| FIG 6B |

EP 1 952 574 B1

# FIG 6B

AUTH  SUPP  AS

EAP AUTHENTICATION2 (basierend auf NAI: MP-B@AAA-S)

EAP-SUCCESS: MSK2 [POLICY-B] [LT-B]

Speichern:
NAI=MP-B@AAA-S
M-AAA-KEY=KDF (MSK2)
POLICY=POLICY-B
LIFETIME=LT-B

EAP-SUCCESS

AS

EAP AUTHENTICATION2' (basierend auf NAI: MP-B)

Eintrag für NAI: MP-B gespeichert ?

ja

nein

EAP-SUCCESS: MSK2' [POLICY-B][LT-B]

Nutze EAP Methode mit dem zu MP-B gespeicherten M-AAA-KEY

802.11 4WHS (MSK2')

Authentisierung nicht erfolgreich

Geschützte Kommunikation basierend auf KDF (MSK1')

Geschützte Kommunikation basierend auf KDF (MSK2')

EP 1 952 574 B1

MP-A

MP-B

MESH-AAA

AAA-S

SUPP

AUTH

AS

802.11 Verbindungs-Setup

OUTER EAP AUTHENTICATION1 (basierend auf NAI: MP-A) [PEAP]

INNER EAP AUTHENTICATION1 (basierend auf NAI: MP-A@AAA-S)

EAP-SUCCESS: MSK1 [POLICY-A]
[LT-A]

Speichern:
NAI=MP-A@AAA-S
M-AAA-KEY=KDF (MSK1)
POLICY=POLICY-A
LIFETIME=LT-A

AS

FIG 7

| FIG 7A |
|--------|
| FIG 7B |

EAP-SUCCESS: PEAP-KEY
[POLICY-A][LT-A]

802.11 4WHS (PEAP-KEY)

EP 1 952 574 B1

# FIG 7B

AUTH　　　　SUPP　　　　　　　　　　　AS

EAP AUTHENTICATION2 (basierend auf NAI: MP-B@AAA-S)

EAP-SUCCESS: MSK2 [POLICY-B] [LT-B]

Speichern:
NAI=MP-B@AAA-S
M-AAA-KEY=KDF (MSK2)
POLICY=POLICY-B
LIFETIME=LT-B

EAP-SUCCESS: MSK2 [POLICY-B][LT-B]

AS

EAP AUTHENTICATION2' (basierend auf NAI: MP-B)

Eintrag
für NAI: MP-B
gespeichert
?

ja

nein

EAP-SUCCESS: MSK2' [POLICY-B][LT-B]

802.11 4WHS (MSK2')

Nutze EAP
Methode mit
dem zu MP-B
gespeicherten
M-AAA-KEY

Authentisierung
nicht
erfolgreich

Geschützte Kommunikation
basierend auf KDF (PEAP-KEY)

Geschützte Kommunikation
basierend auf KDF (MSK2')

EP 1 952 574 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050152305 A1

**In der Beschreibung aufgeführte Nicht-Patentliteratur**

- IEEE standard for local and metropolitan area networks - Port-based network access control. *IEEE 802.X-2004,* 13. Dezember 2004, ISBN 0-7381-4528-8, 37-40
- IEEE standard for local and metropolitan area networks - Wireless LAN Medium Access Conrol - Security Enhancements. *IEEE 802.11i-2004,* 23. Juli 2004, ISBN 0-7381-4073-2, 13-1519-20
- **Faccin, S.M.** Mesh WLAN networks: concept and system design. *Wireless Communications, IEEE.,* April 2006, vol. 13 (2), 10-17
- **Jyh-Cheng, C.** Wireless LAN security and IEEE 802.11i. *Wireless Communications, IEEE,* Februar 2005, vol. 12 (1), 27-36
- **Fan, Y.** An improved security scheme in WMAN based on IEEE standard 802.16. *Proceedings, International Conference on Wirelless Communications, Networking and Mobile computing,* 23. September 2005, vol. 2, 1191-1194
- Public WLAN Interworking Study. *Intel White-Paper,* 2004